(19) **Europäisches Patentamt**
**European Patent Office**
**Office européen des brevets**

(11) **EP 4 679 702 A1**

(12) **EUROPEAN PATENT APPLICATION**
published in accordance with Art. 153(4) EPC

(43) Date of publication:
**14.01.2026 Bulletin 2026/03**

(21) Application number: **23926250.4**

(22) Date of filing: **07.03.2023**

(51) International Patent Classification (IPC):
***H02M 7/48*** (2007.01)

(52) Cooperative Patent Classification (CPC):
**H02M 7/48**

(86) International application number:
**PCT/JP2023/008601**

(87) International publication number:
**WO 2024/185036 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **KAJIYAMA, Takuya**
**Tokyo 100-8310 (JP)**
• **FUJII, Toshiyuki**
**Tokyo 100-8310 (JP)**
• **MUKUNOKI, Kaho**
**Tokyo 100-8310 (JP)**
• **KONO, Yoshiyuki**
**Tokyo 100-8310 (JP)**

(74) Representative: **Witte, Weller & Partner**
**Patentanwälte mbB**
**Postfach 10 54 62**
**70047 Stuttgart (DE)**

(54) **POWER CONVERSION SYSTEM**

(57) A self-commutated power converter (110) is connected between an AC system (1) and a DC system (3). In a first operation mode in which the power converter (110) operates as a voltage source, a control device (200) sets an AC current command value of an AC output current (Iacu, Iacv, Iacw) based on a fundamental wave component of the AC output current (Iacu, Iacv, Iacw) measured by an AC current detector (9). In the first operation mode, the control device (200) generates an on/off command (Sul, Suu, Svl, Svu, Swl, Swu) for a semiconductor switching element of the power converter (110) so as to control an AC voltage of an AC terminals (Nu, Nv, Nw) according to the sum of a feedback component for compensating a difference between the AC output current (Iacu, Iacv, Iacw) and the AC current command value and an AC component having a frequency of the fundamental wave component.

FIG.1

EP 4 679 702 A1

**Description**

TECHNICAL FIELD

The present disclosure relates to a power conversion system.

BACKGROUND ART

A high voltage direct current (HVDC) system is widely known as a system in which two or more AC systems are interconnected by a DC circuit. Power converters that perform AC/DC conversion are provided between each AC system and the DC circuit in the HVDC system, and each power converter has an independent control system. Each power converter has a common or independent power storage element (capacitor).

In the HVDC system in which a self-commutated converter is used as a power converter for AC/DC conversion, since the self-commutated converter can operate as a voltage source, when an AC system to be interconnected is blacked out, the self-excited converter can operate to start up (black start) the AC system.

Japanese Patent No. 6730946 (PTL 1) describes a control for continuing the operation of a power converter (self-commutated converter) during such a black start. Specifically, it is described that during a black start, an AC voltage command value for AC current control is set based on a preset AC voltage component and a voltage component for setting a harmonic current other than the fundamental wave extracted from an AC current measurement value to zero.

CITATION LIST

PATENT LITERATURE

PTL 1: Japanese Patent No. 6730946

SUMMARY OF INVENTION

TECHNICAL PROBLEM

In the case of black starting an AC system, when the self-commutated converter generates an AC voltage to start up the AC system, since a generator and a load included in the AC system are interconnected to the AC system, there is a concern that a large current may be generated due to an increase in the output current. In this case, it is important to suppress an overcurrent because a self-commutated converter using a self-commutating semiconductor device cannot operate with a large current such as two to three times the rated current of the self-commutating semiconductor device even for a short time.

However, although the AC current control performed during a black start as described in PTL 1 has a suppression effect on a sudden current rise that is different from the frequency of the fundamental wave component, it is difficult to obtain an appropriate suppression effect when the current of the fundamental wave component increases according to an increase in the load. This may limit the operation of the power conversion system that operates as a voltage source, which may deteriorate the operation continuation performance.

The present disclosure has been made to solve such a problem, and an object of the present disclosure is to improve the operation continuation performance of a power conversion system that operates as a voltage source.

SOLUTION TO PROBLEM

According to an aspect of the present disclosure, a power conversion system is provided. The power conversion system includes a power converter that is connected between an AC circuit and a DC circuit, an AC current detector, and a control device. The power converter includes at least one self-commutating type semiconductor switching element. The AC current detector that detects an AC output current from the power converter to the AC circuit. The control device generates an on/off command for the semiconductor switching element to control the power converter. The control device includes a current command value setting unit and an AC current control unit. The current command value setting unit sets an AC current command value. The AC current control unit generates the on/off command according to an AC voltage command value calculated to cause the AC output current detected by the AC current detector to follow the AC current command value. In a first operation mode in which the power converter operates as a voltage source, the current command value setting unit sets the AC current command value based on a fundamental wave component of the AC output current detected by the AC current detector. In the first operation mode, the AC current control unit calculates the AC voltage command value according to the sum of a feedback component for compensating for a current difference between the AC current command value and the AC output current detected by the AC current detector and an AC component having a frequency of the fundamental wave component.

ADVANTAGEOUS EFFECTS OF INVENTION

According to the present disclosure, in the first operation mode in which the power converter operates as a voltage source, the AC current command value of the AC output current of the power converter is set based on the measured fundamental wave component of the AC output current, it is possible to prevent the power converter from being stopped by the overcurrent protection, which makes it possible to improve the operation continuation performance of the power conversion system.

BRIEF DESCRIPTION OF DRAWINGS

Fig. 1 is a schematic configuration diagram illustrating a power conversion system according to the present embodiment.
Fig. 2 is a block diagram illustrating an exemplary hardware configuration of a control device illustrated in Fig. 1.
Fig. 3 is a functional block diagram illustrating an exemplary functional configuration of the control device according to a first embodiment.
Fig. 4 is a functional block diagram illustrating an exemplary functional configuration of a voltage FF control unit illustrated in Fig. 3.
Fig. 5 is a functional block diagram illustrating a first exemplary functional configuration of a current command value setting unit according to the first embodiment.
Fig. 6 is a functional block diagram illustrating a second exemplary functional configuration of the current command value setting unit according to the first embodiment.
Fig. 7 is a conceptual diagram illustrating functions of a current upper limit value adjustment unit illustrated in Fig. 6.
Fig. 8 is a functional block diagram illustrating a third exemplary functional configuration of the current command value setting unit according to the first embodiment.
Fig. 9 is a functional block diagram illustrating a fourth exemplary functional configuration of the current command value setting unit according to the first embodiment.
Fig. 10 is a functional block diagram illustrating a first exemplary functional configuration of a current command value setting unit according to a second embodiment.
Fig. 11 is a conceptual waveform diagram illustrating operations of a ramp rate limiter (RRL) illustrated in Fig. 10.
Fig. 12 is a functional block diagram illustrating a second exemplary functional configuration of the current command value setting unit according to the second embodiment.
Fig. 13 is a functional block diagram illustrating a third exemplary functional configuration of the current command value setting unit according to the second embodiment.
Fig. 14 is a functional block diagram illustrating an exemplary functional configuration of a voltage FF control unit according to the second embodiment.
Fig. 15 is a functional block diagram illustrating an exemplary functional configuration of a current command value setting unit according to a third embodiment.
Fig. 16 is a functional block diagram illustrating an exemplary functional configuration of an AC voltage command value calculation unit according to the third embodiment.
Fig. 17 is a functional block diagram illustrating an exemplary functional configuration of a voltage FF control unit according to the third embodiment.
Fig. 18 is a conceptual diagram illustrating functions of a gain setting unit in Fig. 15.
Fig. 19 is a conceptual diagram illustrating frequency characteristics of a bandpass filter in Fig. 15.
Fig. 20 is a functional block diagram illustrating an exemplary functional configuration of a current command value setting unit according to a combination of the second embodiment and the third embodiment.
Fig. 21 is a schematic configuration diagram illustrating a modification of the power converter.
Fig. 22 is a circuit diagram illustrating a first exemplary configuration of a converter cell illustrated in Fig. 21.
Fig. 23 is a circuit diagram illustrating a second exemplary configuration of the converter cell illustrated in Fig. 21.

DESCRIPTION OF EMBODIMENTS

Hereinafter, embodiments of the present disclosure will be described in detail with reference to the drawings. In the following description, the same or corresponding portions in the drawings are denoted by the same reference numerals, and generally the description thereof will not be repeated.

First Embodiment.

[Example Configuration of Power Conversion System]

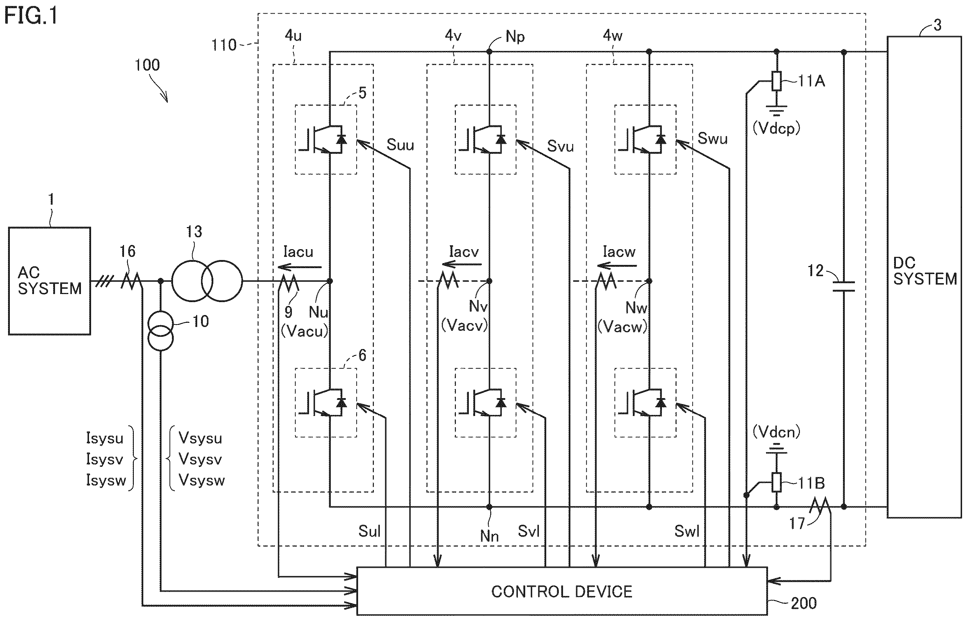

Fig. 1 is a schematic configuration diagram illustrating a power conversion system 100 according to the present embodiment.

The power conversion system 100 is a system that controls electric power of a DC power transmission system having a single pole configuration, and is configured to perform bidirectional DC/AC power conversion between a DC system 3 and an AC system 1. Although the AC system 1 is a three-phase AC system, for ease of illustration, it is illustrated in Fig. 1 by a single line. The AC system 1 corresponds to an AC circuit, and the DC system 3 corresponds to a DC circuit.

The DC system 3 is a DC power transmission line. When the power conversion system 100 is a HVDC system, the length of the DC power transmission line is, for example, several tens to several hundreds of kilometers. When the power conversion system 100 is a BTB (Back To Back) system, the length of the DC power transmission line is, for example, several meters to several tens of meters.

Note that a system (HVDC system) may be formed by connecting the DC system 3 to another AC system (not shown) via a DC/AC converter (not shown) which is substantially the same as the power conversion system so as to transmit and receive power between the AC system 1 and the other AC system.

As illustrated in Fig. 1, the power conversion system 100 according to the first embodiment includes a power converter 110 and a control device 200. The power converter 110 is connected between the AC system 1 and the DC system 3.

The power converter 110 is a self-commutated power converter, and is configured to function as a converter that converts AC power into DC power and an inverter that converts DC power into AC power. The power converter 110 performs power conversion between the AC system 1 and the DC system 3. The power converter 110 includes a plurality of leg circuits 4u, 4v and 4w. The plurality of leg circuits 4u, 4v and 4w are connected in parallel with each other between a positive electrode DC terminal (in other words, a high-potential DC terminal) Np and a negative electrode DC terminal (in other words, a low-potential DC terminal) Nn. In the following description, the plurality of leg circuits 4u, 4v and 4w may be collectively referred to as the "leg circuit 4".

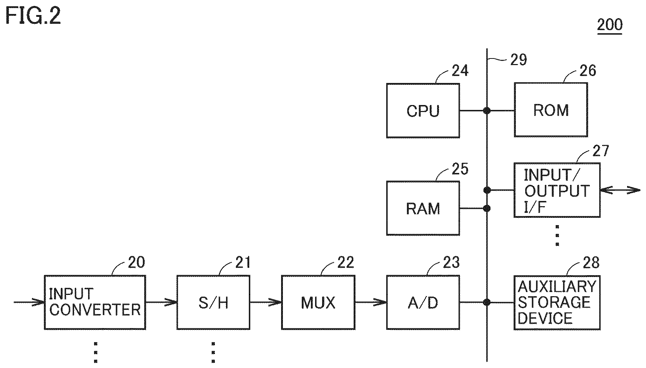

The leg circuit 4 is provided in each of a plurality of phases that constitutes an AC current. The leg circuit 4 is connected between the AC system 1 and the DC system 3, and is configured to perform power conversion between the two systems. Fig. 2 illustrates a case where the AC system 1 is a three-phase AC system, and three leg circuits 4u, 4v and 4w are provided for the U phase, the V phase and the W phase, respectively.

AC terminals Nu, Nv and Nw provided in the leg circuits 4u, 4v and 4w, respectively, are connected to the AC system 1 via a transformer 13. In Fig. 1, for ease of illustration, the connection between the AC terminals Nv and Nw and the transformer 13 is not illustrated.

Instead of using the transformer 13 in Fig. 1, the AC terminals may be connected to the AC system 1 via an interconnected reactor (not shown). Further, a primary winding may be provided in each of the leg circuits 4u, 4v and 4w instead of the AC terminals Nu, Nv and Nw, and the leg circuits 4u, 4v and 4w may be electrically connected to the transformer 13 or the interconnection reactor via a secondary winding magnetically coupled to the primary winding. In other words, the leg circuit 4 is electrically (i.e., DC or AC) connected to the AC system 1 through a connection unit provided in each of the leg circuits 4u, 4v and 4w, such as the AC terminals Nu, Nv and Nw or the primary winding.

The high-potential DC terminal Np and the low-potential DC terminal Nn jointly connected to each leg circuit 4 are connected to the DC system 3.

In the first embodiment, the power converter 110 is configured as a two-level converter. Specifically, in the power converter 110 illustrated in Fig. 1, each of the U-phase leg circuit 4u, the V-phase leg circuit 4v and the W-phase leg circuit 4w includes an upper arm 5 and a lower arm 6. Each of the upper arm 5 and the lower arm 6 is composed of a freewheeling diode (FWD) connected in anti-parallel to a self-commutating type switching element 31 which is capable of controlling both ON operation and OFF operation. As the switching element 31, for example, an IGBT (Insulated Gate Bipolar Transistor), a GCT (Gate-Commutated Turn-off) thyristor, a MOSFET (Metal-Oxide-Semiconductor Field Effect Transistor), or the like may be used.

A power storage element 12 is connected between the high-potential DC terminal Np and the low-potential DC terminal Nn. The power storage element 12 is a capacitor. In the following description, the power storage element 12 may be referred to as the "capacitor".

The power conversion system 100 further includes an AC current detector 9, an AC current detector 16, an AC voltage detector 10, a DC voltage detector 11A, a DC voltage detector 11B, and a DC current detector 17, each of which is configured to detect an amount of electricity (current, voltage or the like) used for control. The signals detected by these detectors are input to the control device 200.

The AC current detector 9 detects currents output from the AC terminals Nu, Nv and Nw to the transformer 13, in other words, the U-phase, V-phase and W-phase AC output currents Iacu, Iacv and Iacw corresponding to the output currents from the power converter 110 to the AC system 1. In the following description, Iacu, Iacv and Iacw may be collectively referred to as the AC output current Iac.

The AC voltage detector 10 detects a U-phase AC voltage Vsysu, a V-phase AC voltage Vsysv, and a W-phase AC voltage Vsysw of the AC system 1. In the following description, Vsysu, Vsysv and Vsysw may be collectively referred to as the system AC voltage Vsys.

The AC current detector 16 detects a U-phase AC current Isysu, a V-phase AC current Isysv, and a W-phase AC current Isysw of the AC system 1. In the following description, Isysu, Isysv and Isysw may be collectively referred to as the system AC current Isys.

The DC voltage detector 11A detects a DC voltage Vdcp of the high-potential DC terminal Np connected to the DC system 3. The DC voltage detector 11B detects a DC voltage Vdcn of the low-potential DC terminal Nn connected to the DC system 3. The DC current detector 17 detects a DC current Idc flowing through the high-potential DC terminal Np or the low-potential DC terminal Nn.

The control device 200 controls the operation of the power converter 110. Specifically, the control device 200 controls the power converter 110 to perform power conversion by outputting on/off control signals Suu, Sul, Svu, Svl, Swu and Swl of the switching element 31 in each of the upper arm 5 and the lower arm 6 of the leg circuits 4u to 4w.

[Configuration of Control Unit]

(Exemplary Hardware Configuration of Control Device)

Fig. 2 is a block diagram illustrating an exemplary hardware configuration of the control device 200. Fig. 2 illustrates an example in which the control device 200 is constituted by a computer.

As illustrated in Fig. 2, the control device 200 includes one or more input converters 20, one or more sample-hold (S/H) circuits 21, a multiplexer (MUX) 22, and an analog-to-digital (A/D) converter 23. Further, the control device 200 includes one or more CPU (Central Processing Unit) 24, a RAM (Random Access Memory) 25, and a ROM (Read Only Memory) 26. Furthermore, the control device 200 includes one or more input/output interfaces 27, an auxiliary storage device 28, and a bus 29 that interconnects the components described above.

The input converter 20 includes an auxiliary transformer (not shown) provided for each input channel. Each auxiliary transformer converts a detection signal from each electric detector illustrated in Fig. 1 into a signal having a voltage level suitable for subsequent signal processing.

The sample-hold circuit 21 is provided for each input converter 20. The sample-hold circuit 21 samples the signal representing an amount of electricity received from a corresponding input converter 20 at a specified sampling frequency and holds the sampled signal.

The multiplexer 22 sequentially selects the signal held in each of the plurality of sample-hold circuits 21. The A/D converter 23 converts the signal selected by the multiplexer 22 into a digital value. By providing a plurality of A/D converters 23, the A/D conversion may be performed in parallel on detection signals of a plurality of input channels.

The CPU 24 controls the entire control device 200, and performs an arithmetic operation according to a program. The RAM 25 which is a volatile memory and the ROM 26 which is a nonvolatile memory are used as the main memory of the CPU 24. The ROM 26 stores programs, setting values for processing signals, and the like. The auxiliary storage device 28 is a nonvolatile memory having a larger capacity than that of the ROM 26, and stores data such as programs, detection values of the amount of electricity, and the like. The input/output interface 27 is an interface circuit for communication between the CPU 24 and an external device.

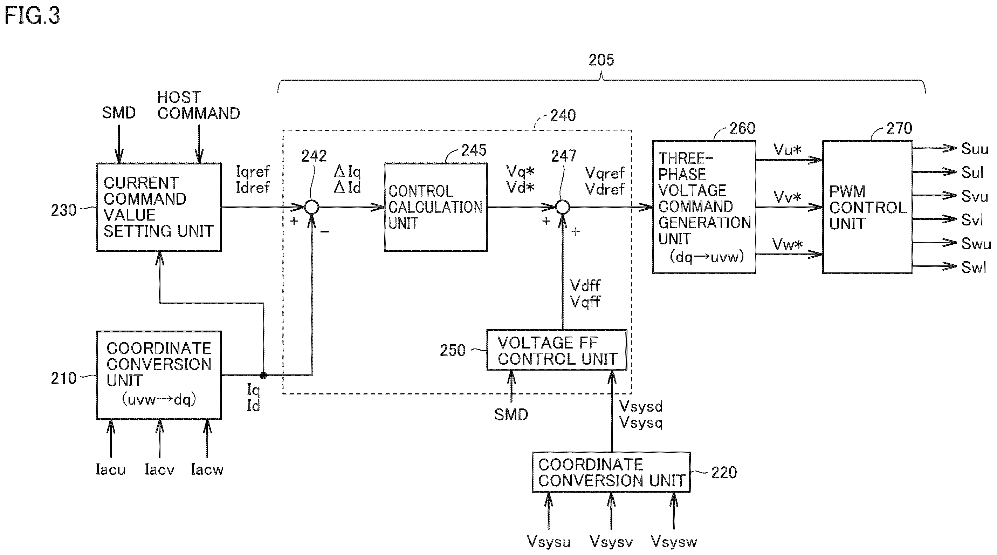

However, different from the example in Fig. 2, at least a part of the control device 200 may be constituted by a circuit such as an FPGA (Field Programmable Gate Array) or an ASIC (Application Specific Integrated Circuit). In other words, each functional block described later in Fig. 3 and the subsequent figures may be constituted on the basis of the computer illustrated in Fig. 2, or at least a part thereof may be constituted by a circuit such as an FPGA or an ASIC. Further, at least a part of each functional block may be constituted by an analog circuit.

(Exemplary Functional Configuration of Control Device)

With reference to Fig. 1 again, since the self-commutated power converter 110 can operate as a voltage source, similar to that described in PTL 1, when the AC system 1 is blacked out, it can perform a black start by outputting a predetermined AC voltage to the AC system 1. In addition, since the power converter 110 is interconnected with the AC system 1, it can also control power input or output from the power converter 110 to the AC system 1.

Hereinafter, in the present embodiment, it is assumed that the power converter 110 performs the power conversion operation by selectively applying a plurality of operation modes, and the plurality of operation modes include at least a "voltage source mode" applied at the time of a black start and a "system-connected mode" applied at the time of interconnection with the AC system 1. The voltage source mode corresponds to a "first operation mode", and the system-connected mode corresponds to a "second operation mode".

As to be described later, the control device 200 switches the contents of the control operation for generating the on/off control signals Suu, Sul, Svu, Svl, Swu and Swl of the switching elements 31 illustrated in Fig. 1 between the voltage source mode and the system-connected mode. A command of selecting a mode between a plurality of operation modes including the voltage source mode and the system-connected mode is input from a host system (not shown).

In the system-connected mode, the control device 200 controls the AC output current of the power converter 110 so that the power conversion system 100 operates in synchronization with the voltage and the frequency of the AC system 1.

In the first embodiment, the control function in the voltage source mode will be mainly described. In the case where there is no generator (or there is no sufficient generators) to support the voltage and frequency of the AC system 1, for example, in a case where the AC system 1 is blacked out, or in a case where the AC system 1 includes only a renewable power source or a load, a device is required to generate a voltage for establishing the AC system 1. In such a case, the operation mode of the power conversion system 100 is set to the voltage source mode according to a command from a host (not shown). Thus, according to the present embodiment, the voltage source mode is applied at least at a black start, and it may be applied to any situation described above other than the black start.

When the voltage source mode is instructed, the control device 200 controls the operation of the power converter 110 so as to control the system voltage (voltage and frequency) of the AC system 1. In the voltage source mode, the AC output current of the power converter 110 is determined depending on the constituent elements connected to the AC system 1, but in the present embodiment, the control device 200 controls the AC output current so as to prevent an overcurrent from occurring in the switching element 31 or the like.

Fig. 3 is a functional block diagram illustrating an exemplary functional configuration of the control device 200 according to the first embodiment.

As illustrated in Fig. 3, the control device 200 includes an AC current control unit 205, a coordinate conversion unit 210, a coordinate conversion unit 220, and a current command value setting unit 230. The AC current control unit 205 includes an AC voltage command value calculation unit 240, a three-phase voltage command generation unit 260, and a PWM (Pulse Width Modulation) control unit 270.

The coordinate conversion unit 210 converts each of the AC output currents Iacu, Iacv and Iacw, which are supplied from the power converter 110 to the AC system 1 and are detected by the AC current detector 9, into a d-axis current Id and a q-axis current Iq according to a known rotational coordinate conversion from three phases to two phases (d-axis and q-axis). The rotational coordinate conversion is performed in the coordinate conversion unit 210 according to the following equation (1).

[Math. 1]

$$\begin{bmatrix} \text{Id} \\ \text{Iq} \end{bmatrix} = \sqrt{\frac{2}{3}} \cdot \begin{bmatrix} \cos\theta & \cos\left(\theta - \frac{2}{3}\pi\right) & \cos\left(\theta + \frac{2}{3}\pi\right) \\ \sin\theta & -\sin\left(\theta - \frac{2}{3}\pi\right) & -\sin\left(\theta + \frac{2}{3}\pi\right) \end{bmatrix} \begin{bmatrix} \text{Iac}u \\ \text{Iac}v \\ \text{Iac}w \end{bmatrix} \qquad (1)$$

Wherein θ in the equation (1) represents a phase synchronized with the system voltage phase in the system-connected mode, and is calculated by a known PLL control (phase synchronization control). In the voltage source mode, θ is calculated by self-commutated oscillation based on a fundamental frequency fsys (such as 50 Hz or 60 Hz). Therefore, the d-axis current Id and the q-axis current Iq are calculated as currents indicating the frequency components of the fundamental frequency fsys in the AC output current Iacu, Iacv or Iacw, in other words, the amplitude and phase of the fundamental wave component.

The coordinate conversion unit 220 uses the system AC voltages Vsysu, Vsysv and Vsysw as inputs to perform a rotational coordinate conversion from three phases (the U phase, the V phase, and the W phase) to two phases (the d-axis and the q-axis) similar to the coordinate conversion unit 210 so as to output a d-axis system AC voltage Vsysd and a q-axis system AC voltage Vsysq. As illustrated by the equation (1), the d-axis system AC voltage Vsysd and the q-axis system AC voltage Vqsys can be calculated by replacing the AC output currents Iacu, Iacv and Iacw with the system AC voltages Vsysu, Vsysv and Vsysw detected by the AC voltage detector 10.

The current command value setting unit 230 sets a d-axis current command value Idref and a q-axis current command value Iqref for the d-axis current Id and the q-axis current Iq output from the coordinate conversion unit 210. In the first embodiment, the d-axis current command value Idref and the q-axis current command value Iqref correspond to the "AC current command value".

The AC voltage command value calculation unit 240 includes a subtractor 242, a control calculation unit 245, an adder 247, and a voltage feedforward (FF) control unit 250.

The subtractor 242 subtracts the d-axis current Id and the q-axis current Iq obtained from the coordinate conversion unit 210 from the d-axis current command value Idref and the q-axis current command value Iqref obtained from the current command value setting unit 230 so as to output a d-axis current difference ΔId (ΔId = Idref - Id) and a q-axis current difference ΔIq (ΔIq = Iqref - 1q).

The control calculation unit 245 outputs values Vd* and Vq* calculated by a predetermined control calculation (typically, proportional (P) control, proportional-integral (PI) control, or the like) using the d-axis current difference ΔId and the q-axis current difference ΔIq calculated for each control cycle as inputs.

The adder 247 adds a d-axis voltage FF term Vdff and a q-axis voltage FF term Vqff output from the voltage FF control unit 250 to the calculated values Vd* and Vq* calculated by the control calculation unit 245 to output a d-axis voltage command value Vdref and a q-axis voltage command value Vqref.

Thus, it is understood that the d-axis voltage command value Vdref and the q-axis voltage command value Vqref are calculated according to the sum of Vd* and Vq* which correspond to feedback components for causing the d-axis current Id and the q-axis current Iq (the coordinate conversion unit 210) to follow the d-axis current command value Idref and the q-axis current command value Iqref (the current command value setting unit 230) and the AC components represented by the voltage FF terms Vdff and Vqff.

The three-phase voltage command generation unit 260 converts the d-axis voltage command value Vdref and the q-axis voltage command value Vqref into three-phase voltage command values Vu*, Vv* and Vw* by a predetermined two-phase/three-phase coordinate conversion. The voltage command values Vu*, Vv* and Vw* are sinusoidal voltages of the fundamental frequency fsys whose phases are shifted by 120 degrees.

The PWM control unit 270 generates the on/off control signals Suu, Sul, Svu, Svl, Swu and Swl of each switching elements 31 in the upper and lower arms of the U-phase to V-phase of the power converter 110 illustrated in Fig. 1 so as to approximate voltages of the AC terminals Nu, Nv and Nw (AC output voltages Vacu, Vacv and Vacw of the power converter 110) in Fig. 1 to the sinusoidal voltages indicated by the three-phase voltage command values Vu*, Vv* and Vw* according to a PWM control that compares each of the three-phase voltage command values Vu*, Vv* and Vw* with the carrier signal.

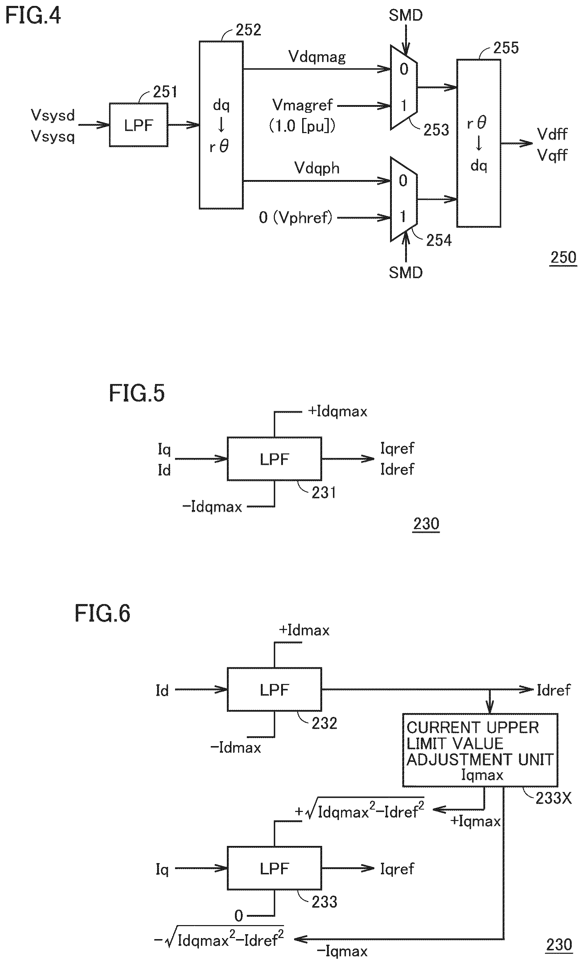

Fig. 4 is a functional block diagram illustrating an exemplary functional configuration of the voltage FF control unit 250.

As illustrated in Fig. 4, the voltage FF control unit 250 includes a low pass filter (LPF) 251, a coordinate conversion unit 252, a selector 253, a selector 254, and a coordinate conversion unit 255.

The LPF 251 filters the system AC voltages Vsysd and Vsysq output from the coordinate conversion unit 220 to remove high-frequency components such as noise. The coordinate conversion unit 252 performs a polar coordinate conversion on the filtered d-axis system AC voltage Vsysd and the filtered q-axis system AC voltage Vsysq, and calculates an amplitude Vdqmag and a phase Vdqph according to the following equations (2) and (3).

[Math. 2]

$$Vdqmag = \sqrt{(Vsysq^2 + Vsysd^2)} \qquad (2)$$

$$Vdqph = tan^{-1}\left(\frac{Vsysd}{Vsysq}\right) \qquad (3)$$

The selectors 253 and 254 switch outputs according to a mode selection signal SMD. The mode selection signal SMD is set to "1" when the voltage source mode is instructed, and is set to "0" when the system-connected mode is instructed. For example, the mode selection signal SMD is input from a host system that manages the power conversion system 100.

The selector 253 outputs one of the amplitude Vdqmag calculated by the coordinate conversion unit 252 and an amplitude Vmagref (for example, Vmagref = 1.0 [pu]) predetermined for the voltage source mode according to the mode selection signal SMD. Similarly, the selector 254 outputs one of the phase Vdqph calculated by the coordinate conversion unit 252 and a phase Vphref (for example, Vphref = 0) predetermined for the voltage source mode according to the mode selection signal SMD.

In the voltage source mode where SMD is set to "1", the selectors 253 and 254 output the predetermined amplitude Vmagref and the predetermined phase Vphref, respectively. On the other hand, in the system-connected mode where SMD is set to "0", the selectors 253 and 254 output the amplitude Vdqmag and the phase Vdqph calculated by the coordinate conversion unit 252, respectively.

The coordinate conversion unit 255 performs conversion from a polar coordinate system to a rotational coordinate system (d-q axis) using the amplitude output from the selector 253 and the phase output from the selector 254 to calculate the d-axis voltage FF term Vdff and the q-axis voltage FF term Vqff.

Thus, the voltage FF terms Vdff and Vqff each represent an AC (sinusoidal wave) component having a predetermined amplitude and phase in the voltage source mode (SMD = 1). On the other hand, in the system-connected mode (SMD = 0), the voltage FF terms Vdff and Vqff each represent an AC (sinusoidal wave) component having the same amplitude and phase as the system AC voltage Vsys.

With reference to Fig. 3 again, in the current command value setting unit 230, the calculation of the d-axis current command value Idref and the q-axis current command value Iqref is also switched according to the mode selection based on the mode selection signal SMD from a host system.

In the system-connected mode where SMD is set to 0, the current command value setting unit 230 sets the current command values Idref and Iqref for current control according to a command from the host system. For example, when a command for power control is given from the host system, the current command values Idref and Iqref are generated so as to control the active current component (Iq) and the reactive current component (Id) according to the command.

Thus, in the system-connected mode, the power conversion system 100 is operated as a current source which is synchronized with the system AC voltage Vsys of the AC system 1 and follows a command from the host system.

On the other hand, according to the present embodiment, in the voltage source mode where SMD is set to 1, the current command value setting unit 230 generates the current command values Idref and Iqref based on the fundamental wave component of the AC output current Iac detected by the AC current detector 9. In other words, in the voltage source mode applied at a black start, the current command values Idref and Iqref are generated to prevent frequency components other than the positive phase fundamental wave of the AC output current Iac from fluctuating steeply.

Thus, in the voltage source mode, the power conversion system 100 operates as a voltage source that outputs an AC voltage of a fundamental frequency fsys having a predetermined amplitude and phase determined according to the voltage FF terms Vdff and Vqff such that the AC output current Iac is limited according to the current command values Idref and Iqref.

Hereinafter, an exemplary functional configuration of the current command value setting unit 230 for generating the current command values Idref and Iqref in the voltage source mode according to the first embodiment will be described in detail.

Fig. 5 is a functional block diagram illustrating a first exemplary functional configuration of a current command value setting unit according to the first embodiment.

As illustrated in Fig. 5, in the first exemplary functional configuration, the current command value setting unit 230 includes a low-pass filter (LPF) 231 with a limiter function. The LPF 231 filters the d-axis current Id and the q-axis current Iq sequentially output from the coordinate conversion unit 210, and generates the d-axis current command value Idref and the q-axis current command value Iqref according to the filtered d-axis current Id and the filtered q-axis current Iq, respectively.

At this time, the LPF 231 performs a limit process so as to limit each of the current command values Idref and Iqref within a predetermined range of -Idqmax to +Idqmax (-Idqmax ≤ Idref ≤ +Idqmax, -Idqmax ≤ Iqref ≤ +Idqmax).

For example, when the filtered d-axis current Id is larger than Idqmax (Id > Idqmax), Idref is set equal to Idqmax by the limit process. Similarly, when the filtered d-axis current Id is smaller than -Idqref (Id < -Idqmax), Idref is set equal to -Idqmax by the limit process. On the other hand, when the filtered d-axis current Id satisfies -Idqref< Id < +Idqmax, Idref is set equal to Id. The same limit process is also performed on the filtered q-axis current Iq.

The upper limit values +Idqmax and -Idqmax in the limit process performed by the LPF 231 are set based on an allowable upper limit value of the current amplitude. The allowable upper limit value can be set, for example, according to a rated current of the switching element 31 constituting the power converter 110 so as to prevent the overcurrent protection of the power converter 110 from being activated. The upper limit value in the limit process may be set to have the same absolute value on the positive side and the negative side, or may be set to have different absolute values on the positive side and the negative side.

Thus, the current command values Idref and Iqref are set based on the present d-axis current Id and the present q-axis current Iq to prevent the AC output current Iac from rapidly fluctuating. Furthermore, it is possible to prevent an overcurrent from occurring in the power converter 110 by performing the limit process.

Fig. 6 illustrates a second exemplary functional configuration of a current command value setting unit according to the first embodiment.

With reference to Fig. 6, in the first exemplary functional configuration, the current command value setting section 230 includes low-pass filters (LPF) 232 and 233 with a limiter function, and a current upper limit value adjustment unit 233X.

The LPF 232 filters the d-axis current Id output from the coordinate conversion unit 210, and generates the d-axis current command value Idref according to the filtered d-axis current Id. The LPF 233 filters the q-axis current Iq output from the coordinate conversion unit 210, and generates the q-axis current command value Iqref according to the filtered q-axis current Iq.

In Fig. 6, the current upper limit values used in the limit process of the LPFs 232 and 233 are individually set. In the LPF 232, the limit process is performed to limit the current command value Idref within a predetermined range from -Idmax to +Idmax. The current upper limit value Idmax corresponds to an example of the "first upper limit value".

On the other hand, the current upper limit value Iqmax used in the limit process of the LPF 233 is variably set by the current upper limit value adjustment unit 233X according to the output value (Idref) of the LPF 232. The current upper limit value Iqmax corresponds to an example of the "second upper limit value".

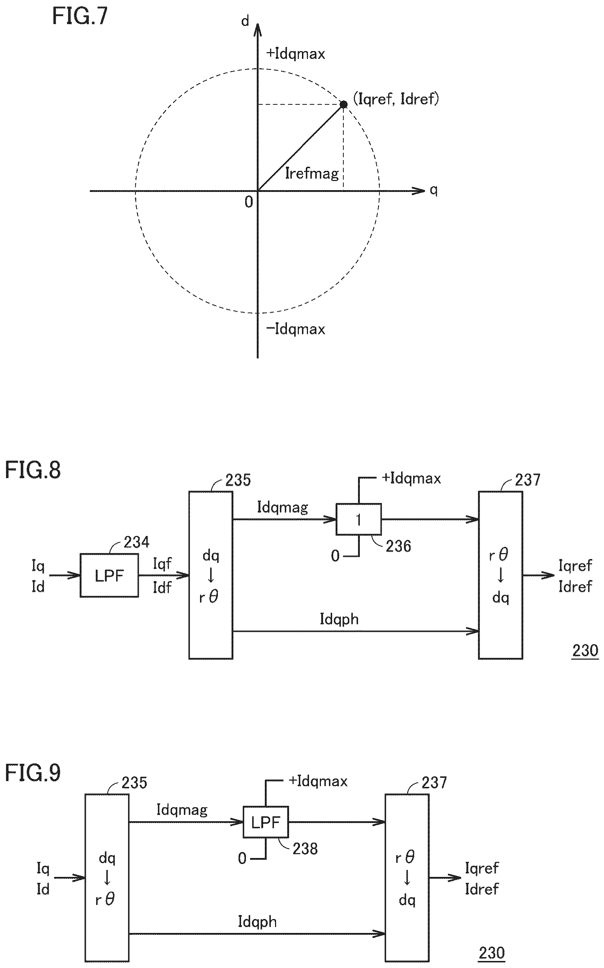

Fig. 7 is a conceptual diagram illustrating functions of the current upper limit value adjustment unit 233X.

The current amplitude Irefmag based on the current command values Idref and Iqref is expressed by Irefmag = $\sqrt{(Idref^2+Iqref^2)}$ using Idref and Iqref on the d-q plane. Therefore, the current upper limit value adjustment unit 233X calculates the current upper limit value Iqmax of the q-axis current command value Iqref according to the following equation (4) so as to prevent the current amplitude Irefmag based on the current command value Idref set by the LPF 232 and the current command value Iqref set by the LPF 233 from exceeding the current upper limit value Idqmax. The current upper limit value Idqmax in the equation (4) is set in accordance with the allowable upper limit value of the current amplitude described above.

[Math. 3]

$$Iqmax=\sqrt{\left(Idqmax^2 - Idref^2\right)} \qquad (4)$$

The current upper limit value in the limit process of the LPF 233 can be set to +Iqmax and -Iqmax using the current upper limit value Iqmax calculated by the current upper limit value adjustment unit 233X. Alternatively, the current upper limit value in the limit process of the LPF 233 may be set to have different absolute values on the positive side and the negative side.

According to the second exemplary functional configuration in Fig. 6, it is easy to ensure the current amplitude Irefmag in a range not exceeding the current upper limit value Idqmax. On the other hand, the current command values Idref and Iqref are more likely to be set in such a manner that the current phase changes with the present d-axis current Id and the present q-axis current Iq.

The d-axis current Id and the q-axis current Iq illustrated in Fig. 6 may be exchanged. In this case, the LPF 232 sets the d-axis current command value Iqref by performing a limit process to keep the q-axis current Iq within the range from -Iqmax to +Iqmax. Further, the current upper limit value adjustment unit 233X can set the current upper limit value Idmax of the d-axis current command value Idref by replacing Idref with Iqref in the equation (4). Then, the LPF 233 sets the d-axis current command value Idref by performing a limit process to keep the d-axis current Id within the range from -Idmax to +Idmax using the current upper limit value Idmax calculated by the current upper limit value adjustment unit 233X. In other words, in this case, the current upper limit value Iqmax corresponds to the "first upper limit value", and the current upper limit value Idmax corresponds to the "second upper limit value".

Fig. 8 is a functional block diagram illustrating a third exemplary functional configuration of the current command value setting unit 230.

As illustrated in Fig. 8, in the third exemplary functional configuration, the current command value setting unit 230 includes a low-pass filter (LPF) 234, a coordinate conversion unit 235, a coordinate conversion unit 237, and a limiter 236.

The LPF 234 filters the d-axis current Id and the q-axis current Iq output from the coordinate conversion unit 210, and outputs a filtered d-axis current Idf and a filtered q-axis current Iqf, respectively.

The coordinate conversion unit 235 performs a polar coordinate conversion on the filtered d-axis current Idf and q-axis current Iqf in the same manner as the coordinate conversion unit 252 to calculate an amplitude Idqmag and a phase Idqph.

The limiter 236 performs a limit process on the amplitude Idqmag calculated by the coordinate conversion unit 235 according to the current upper limit value Idqmax. Therefore, the output value of the limiter 236 is updated to Idqmag = Idqmax when Idqmag > +Idqmax. On the other hand, when Idqmag < +Idqmax, the amplitude Idqmag calculated by the coordinate conversion unit 235 is used as the output value of the limiter 236. The current upper limit value Idqmax in the limiter 236 is set according to the above-described allowable upper limit value of the current amplitude in the same way as in Fig. 6.

The coordinate conversion unit 237 uses the amplitude Idqmag processed by the limiter 236 and the phase Idqph calculated by the coordinate conversion unit 235 to perform the same coordinate conversion as the coordinate conversion unit 255, and thereby generates the d-axis current command value Idref and the q-axis current command value Iqref.

In the third exemplary functional configuration, the current command values Idref and Iqref are set based on the present d-axis current Id and the present q-axis current Iq in such a manner that the amplitude of the system AC current Isys is limited while maintaining the present current phase of the system AC current Isys.

Fig. 9 is a functional block diagram illustrating a fourth exemplary functional configuration of the current command value setting unit according to the first embodiment.

The fourth exemplary functional configuration illustrated in Fig. 9 is different from the third exemplary functional configuration (Fig. 8) in that the filter 234 is not disposed and a low-pass filter (LPF) 238 with a limiter function is disposed to replace the limiter 236.

Thus, the coordinate conversion unit 235 performs a polar coordinate conversion on the d-axis current Id and the q-axis current Iq output from the coordinate conversion unit 210 to calculate the amplitude Idqmag and the phase Idqph. The LPF 238 filters the amplitude Idqmag sequentially calculated by the coordinate conversion unit 235, and performs a limit process on the filtered amplitude Idqmag similar to the limiter 236.

Then, the coordinate conversion unit 237 generates the d-axis current command value Idref and the q-axis current command value Iqref using the amplitude Idqmag processed by the LPF 238 and the phase Idqph calculated by the coordinate conversion unit 235.

According to the fourth exemplary functional configuration, the current command values Idref and Iqref can be set in such a manner that the amplitude of the system AC current Isys is limited while maintaining the present current phase of the system AC current Isys. Further, since the phase Idqph is calculated without being filtered, the current command values Idref and Iqref can quickly follow the changes in the phase of the AC output current Iac.

As described above, according to the first embodiment, in the voltage source mode applied at least at a black start, the power conversion system can operate as a voltage source that outputs an AC voltage of the fundamental frequency fsys having a predetermined amplitude and phase such that the AC output current Iac is controlled according to the current command values Idref and Iqref set based on the present d-axis current Id and the present q-axis current Iq.

Thus, the AC output current Iac from the power converter 110 can be controlled to prevent the AC output current Iac from fluctuating steeply. Therefore, the power conversion system 100 can operate as a voltage source to prevent the overcurrent protection function of the power converter 110 from being activated by a rapid increase in the AC output current Iac (fundamental wave component) in response to an increase in the load current in the AC system 1.

Furthermore, by performing the limit process to generate the current command values Idref and Iqref, it is possible to enhance the effect of preventing an overcurrent from occurring in the power converter 110, which makes it possible to further improve the operation continuation performance of the power conversion system 100 operating as a voltage source.


Second Embodiment.

In a second embodiment, the control for switching the operation modes will be described. The power conversion system according to the second embodiment is different from the power conversion system according to the first embodiment in that a current command value setting unit 230X and a voltage FF control unit 250X to be described later are disposed instead of the current command value setting unit 230 and the voltage FF control unit 250. In the power conversion system according to the second embodiment, the configuration and operation other than those described below are the same as those of the power conversion system 100 described in the first embodiment.

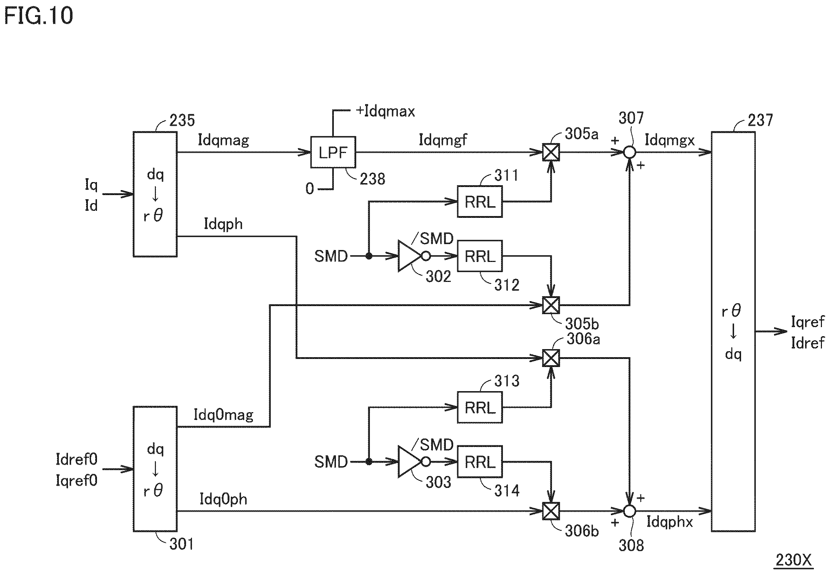

Fig. 10 is a functional block diagram illustrating a first exemplary functional configuration of the current command value setting unit 230X.

As illustrated in Fig. 10, in the first exemplary functional configuration, the current command value setting unit 230X according to the second embodiment includes the coordinate conversion units 235 and 237 and the low-pass filter (LPF) 238 with a limiter function similar to the current command value setting unit 230 illustrated in Fig. 9, and further includes a coordinate conversion unit 301, inverters 302 and 303, multipliers 305a, 305b, 306a and 306b, adders 307 and 308, and ramp rate limiters (RRL) 311 to 314.

The coordinate conversion unit 301 performs a polar coordinate conversion on current command values Idref0 and Iqref0 set in the system-connected mode in the same manner as the coordinate conversion unit 235 to calculate an amplitude Idq0mag and a phase Idq0ph. As described above, the current command values Idref0 and Iqref0 are generated according to a command from a host system.

A mode selection signal SMD is input to each of the RRLs 311 and 313, and an inverted signal /SMD obtained by each of the inverters 302 and 303 from the mode selection signal SMD is input to each of the RRLs 312 and 314. As described above, the mode selection signal SMD is set to "1" in the voltage source mode and is set to "0" in the system-connected mode according to a command from the host system.

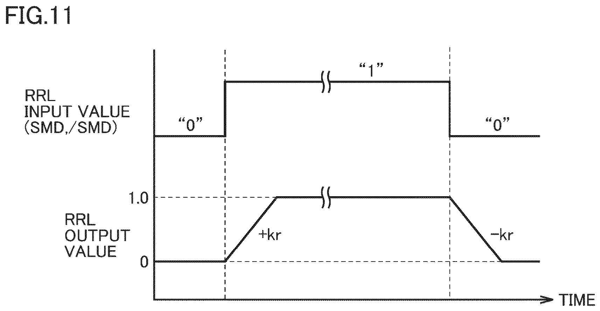

Fig. 11 is a conceptual waveform diagram illustrating operations of the RRLs 311 to 314 in Fig. 10.

With reference to Fig. 11, the output value of RRL is set to the same value as the input value SMD or /SMD in a steady state. On the other hand, when the input value changes from "0" to "1", the output value of RRL gradually changes from 0 to 1.0 according to a predetermined ramp rate kr. However, when the input value changes from "1" to "0", the output value of the RRL gradually changes from 1.0 to 0 according to a predetermined ramp rate -kr.

With reference to Fig. 10 again, the multiplier 305a multiplies the amplitude Idqmgf (for the voltage source mode) filtered by the LPF 238 by the output value of the RRL 311. The multiplier 305b multiplies the amplitude Idq0mag (for the system-connected mode) from the coordinate conversion unit 301 by the output value of the RRL 312. The adder 307 adds the output value of the multiplier 305a and the output value of the multiplier 305b to output an amplitude Idqmgx of the current command value.

In the voltage source mode (SMD = 1), the output value of the RRL 311 is 1.0, whereas the output value of the RRL 312 is 0. Therefore, the output value of the adder 307 becomes Idqmgx = Idqmgf.

When the operation mode is switched from the voltage source mode to the system-connected mode, if the mode selection signal SMD changes from "1" to "0", the output value of the RRL 311 changes from 1.0 to 0 according to the ramp rate -kr, whereas the output value of the RRL 312 changes from 0 to 1.0 according to the ramp rate kr. Therefore, the sum of the output value of the RRL 311 and the output value of the RRL 312 is always maintained at 1.0.

Thus, the output value Idqmgx of the adder 307 is expressed by the following equation (5) using the amplitude Idqmgf (for the voltage source mode), the amplitude Idq0mag (for the system-connected mode), an output value α of the RRL 311, and an output value (1-α) of the RRL 312. The equation (5) is both valid when the mode selection signal SMD is maintained at "0" or "1" and when the mode selection signal SMD is switched between "0" and "1".

$$\mathrm{Idqmgx} = \alpha \cdot \mathrm{Idqmgf} + (1\text{-}\alpha) \cdot \mathrm{Idq0mag} \qquad (5)$$

Similarly, the multiplier 306a multiplies the phase Idqph (for the voltage source mode) from the coordinate conversion unit 235 by the output value of the RRL 313. The multiplier 306b multiplies the phase Idq0ph (for the system-connected mode) from the coordinate conversion unit 301 by the output value of the RRL 314. The adder 308 adds the output value of the multiplier 306a and the output value of the multiplier 306b to output a phase Idqphx of the current command value.

For the mode selection signal SMD, the output value of the PPL 313 is the same as the output value of the RRL 311, and the output value of the PPL 314 is the same as the output value of the RRL 312. Therefore, the output value Idqphx of the adder 308 is expressed by the following equation (6) using the phase Idqph (for the voltage source mode), the phase Idq0ph (for the system-connected mode), α and (1-α) which are the same as those in the equation (5). Also, the equation (6) is both valid when the mode selection signal SMD is maintained at "0" or "1" and when the mode selection signal SMD is switched between "0" and "1".

$$\mathrm{Idqphx} = \alpha \cdot \mathrm{Idqph} + (1\text{-}\alpha) \cdot \mathrm{Idq0ph} \qquad (6)$$

The coordinate conversion unit 237 generates the d-axis current command value Idref and the q-axis current command value Iqref using the amplitude Idqmgx and the phase Idqphx output from the adders 307 and 308, respectively. In the second embodiment, the AC current control unit 205 illustrated in Fig. 3 generates the voltage command values Vdref and Vqref according to the current command values Idref and Iqref set by the current command value setting unit 230X to control the AC output current Iac of the power converter 110.

Thus, when SMD = 1, the current command values Idref and Iqref can be set according to the amplitude Idqmagf and the phase Idqph for the voltage source mode, and when SMD = 0, the current command values Idref and Iqref can be set according to the amplitude Idq0mag and the phase Idq0ph for the system-connected mode. In other words, the current command values Idref and Iqref can be appropriately set in response to a change in the operation mode. Further, when the SMD changes from "1" to "0" or from "0" to "1", the current command values Idref and Iqref can be changed by limiting the amount of change per unit time according to the ramp rate kr or -kr.

Thus, in the power conversion system according to the second embodiment, it is possible to prevent the AC output current Iac from the power converter 110 from fluctuating due to abrupt changes in the current command values Idref and Iqref when the operation mode is switched from the voltage source mode to the system-connected mode. In addition, it is also possible to prevent the current command values Idref and Iqref from changing abruptly when the operation mode is switched from the system-connected mode to the voltage source mode. Thus, it is possible to stabilize the operation of the power conversion system when the operation mode is switched.

In the configuration of Fig. 10, similar to the third exemplary functional configuration of the first embodiment illustrated in Fig. 8, the d-axis current Idf and the q-axis current Iqf filtered by the LPF 234 may be input to the coordinate conversion unit 235, and the LPF 238 may be replaced with the limiter 236.

Although Fig. 10 illustrates an example in which the second embodiment is applied to the exemplary functional configuration illustrated in Fig. 8 or Fig. 9 according to the first embodiment, the second embodiment may be applied to each of the other exemplary configurations described in the first embodiment.

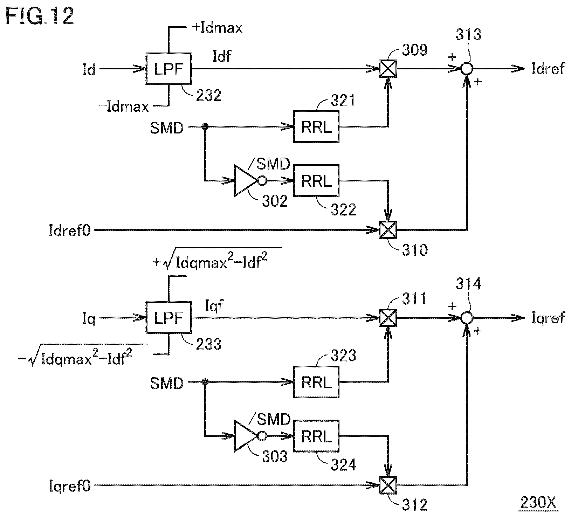

Fig. 12 is a functional block diagram illustrating a second exemplary functional configuration of the current command value setting unit 230X according to the second embodiment.

As illustrated in Fig. 12, in the second exemplary functional configuration, the current command value setting unit 230X includes the LPFs 232 and 233 similar to the current command value setting unit 230 illustrated in Fig. 6, and further includes inverters 302 and 303, multipliers 309 to 312, adders 313 and 314, and ramp rate limiters (RRL) 321 to 324. Similar to Fig. 6, the current upper limit value used in the limiter function of the LPF 233 is set by the current upper limit value adjustment unit 233X (Fig. 6) according to the equation (4).

The output values of the RRLs 321 and 323 are the same as those of the RRLs 311 and 313 of Fig. 10, and the output values of the RRLs 322 and 324 are the same as those of the RRLs 312 and 314 of Fig. 10.

The multiplier 309 multiplies the d-axis current Idf filtered and limited by the LPF 232 by the output value of the RRL 321. The multiplier 310 multiplies the d-axis current command value Idref0 for the system-connected mode by the output value of the RRL 322. The adder 313 adds the output value of the multiplier 309 and the output value of the multiplier 310 to output the d-axis current command value Idref.

Thus, the current command value Idref output from the adder 313 is expressed by the following equation (7) using the d-axis current Idf output from the LPF 232, the d-axis current command value Idref0 for the system-connected mode, the output value $\alpha$ of the RRL 321, and the output value $(1-\alpha)$ of the RRL 322. Also, the equation (7) is both valid when the mode selection signal SMD is maintained at "0" or "1" and when the mode selection signal SMD is switched between "0" and "1".

$$\text{Idref} = \alpha \cdot \text{Idf} + (1-\alpha) \cdot \text{Idref0} \qquad (7)$$

Similarly, the multiplier 311 multiplies the q-axis current Iqf after filtered and limited by the LPF 233 by the output value of the RRL 323. The multiplier 312 multiplies the q-axis current command value Iqref0 for the system-connected mode by the output value of the RRL 324. The adder 312 adds the output value of the multiplier 311 and the output value of the multiplier 312 to output the q-axis current command value Iqref.

Therefore, the current command value Iqref output from the adder 314 is expressed by the following equation (8) using the q-axis current Iqf output from the LPF 233, the q-axis current command value Iqref0 for the system-connected mode, the output value $\alpha$ of the RRL 323, and the output value $(1-\alpha)$ of the RRL 324. Also, the equation (8) is both valid when the mode selection signal SMD is maintained at "0" or "1" and when the mode selection signal SMD is switched between "0" and "1".

$$\text{Iqref} = \alpha \cdot \text{Iqf} + (1-\alpha) \cdot \text{Iqref0} \qquad (8)$$

As described above, even when the current command values Idref and Iqref are set in the voltage source mode according to the second exemplary functional configuration (Fig. 6) of the first embodiment, it is possible to prevent the current command values Idref and Iqref changing abruptly when the operation mode is switched between the voltage source mode and the system-connected mode. In addition, it is also possible to prevent the current command values Idref and Iqref changing abruptly when the operation mode is switched from the system-connected mode to the voltage source mode. Thus, it is possible to stabilize the operation of the power conversion system when the operation mode is switched.

In Fig. 12, the limit process on the d-axis current Id and the limit process on the q-axis current can be switched in the same manner as described with reference to Fig. 6. In other words, the limit process on the q-axis current Iq may be performed within a range from -Iqmax to +Idmax to calculate Iqf, and the limit process using the upper limit value (Iqmax) set by the current upper limit value adjustment unit 233X (Fig. 6) may be performed to calculate Iqf.

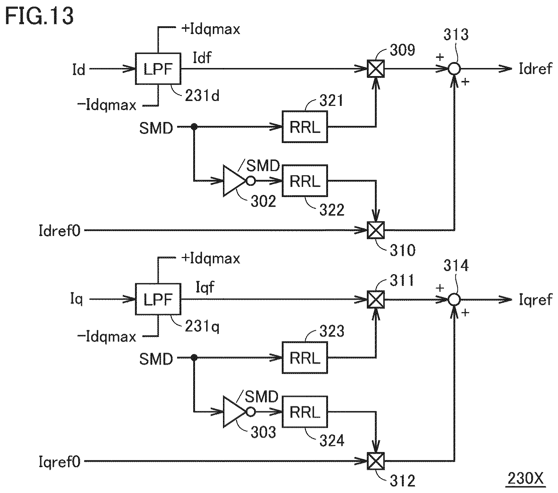

Fig. 13 is a functional block diagram illustrating a third exemplary functional configuration of the current command value setting unit 230X according to the second embodiment.

As illustrated in Fig. 13, in the third exemplary functional configuration, the current command value setting unit 230X includes the LPF 231 similar to the current command value setting unit 230 illustrated in Fig. 5, and further includes inverters 302 and 303, multipliers 309 to 312, adders 313 and 314, and ramp rate limiters (RRL) 321 to 324.

In Fig. 13, the LPF 231 in Fig. 5 is divided into an LPF 231d that filters the d-axis current Id and an LPF 231q that filters the q-axis current Iq. The upper limit values +Idqmax and -Idqmax used in the limit process of the LPFs 231d and 231q are set to the same values as those of the LPF 231 in Fig. 5 based on the allowable upper limit value of the current amplitude.

The configuration of Fig. 13 corresponds to the configuration of Fig. 12 in which the LPFs 232 and 233 are replaced with the LPFs 231d and 231q. Therefore, in the third exemplary configuration illustrated in Fig. 13, the d-axis current command value Idref and the q-axis current command value Iqref are expressed by the above equations (7) and (8). Thus, it is possible to stabilize the operation of the power conversion system when the operation mode is switched in the same manner as described with reference to Figs. 10 and 12.

Hereinafter, the voltage FF control unit 250X in the power conversion unit according to the second embodiment will be described.

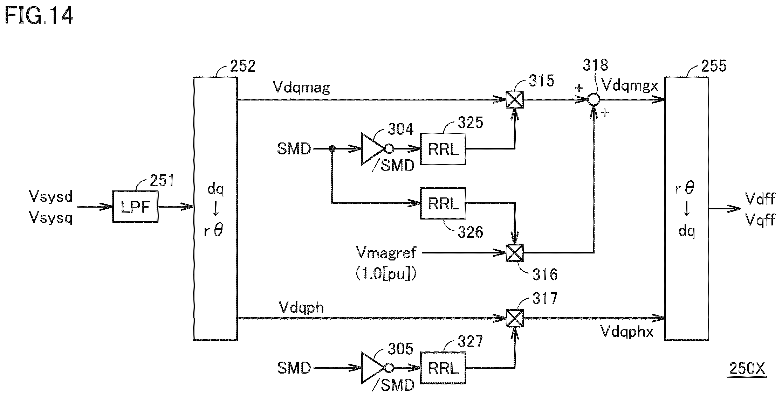

Fig. 14 is a functional block diagram illustrating an exemplary functional configuration of the voltage FF control unit 250X according to the second embodiment.

As illustrated in Fig. 14, the voltage FF control unit 250X includes an LPF 251 and coordinate conversion units 252 and 255 similar to the current FF control unit 250 illustrated in Fig. 4, inverters 304 and 305 disposed instead of the selectors 253 and 254 (Fig. 4), multipliers 315 to 317, an adder 318, and ramp rate limiters (RRL) 325 to 327. In the exemplary configuration of Fig. 14, the phase in the voltage source mode is Vphref = 0.

The coordinate conversion unit 252 performs a polar coordinate conversion on the filtered d-axis system AC voltage Vsysd and the filtered q-axis system AC voltage Vsysq to calculate the amplitude Vdqmag and the phase Vdqph for the system-connected mode.

An inverted signal (/SMD) obtained by each of the inverters 304 and 305 from the mode selection signal SMD is input to each of the RRLs 325 and 327. The mode selection signal SMD is input to the RRL 326. Therefore, the output values of the RRLs 325 and 327 are the same as those of the RRLs 312 and 314 in Fig. 10, and the output values of the RRL 326 are the same as those of the RRLs 311 and 313 in Fig. 10.

The multiplier 315 multiplies the amplitude Vdqmag (for the system-connected mode) from the coordinate conversion unit 252 by the output value of the RRL 325. The multiplier 316 multiplies the amplitude Vmagref (for example, 1.0 [pu]) for the voltage source mode by the output value of the RRL 326. The adder 318 adds the output value of the multiplier 315 and the output value of the multiplier 316 to output an amplitude Vdqmgx of the voltage FF term.

The multiplier 317 multiplies the phase Vdqph (for the system-connected mode) from the coordinate conversion unit 252 by the output value of the RRL 327. The multiplier 317 outputs a phase Vdqphx of the voltage FF term.

Therefore, the amplitude Vdqmgx and the phase Vdqphx of the voltage FF term are expressed by the following equations (9) and (10) using the output value $\alpha$ of the RRL 326 and the output value $(1-\alpha)$ of the RRLs 325 and 327. The equations (9) and (10) are both valid when the mode selection signal SMD is maintained at "0" or "1" and when the mode selection signal SMD is switched between "0" and " 1 ".

$$Vdqmgx = \alpha \cdot Vmagref + (1-\alpha) \cdot Vdqmag \qquad (9)$$

$$Vdqphx = (1-\alpha) \cdot Vdqph \qquad (10)$$

In the voltage source mode (SMD = 1), since $\alpha = 1.0$, Vdqmgx = Vmgref and Vdqphx = 0. On the other hand, in the system-connected mode (SMD = 0), since $\alpha = 0$, Vdqmgx = Vdqmag and Vdqphx = Vdqph. In other words, the voltage FF term can be appropriately changed in response to a change in the operation mode.

The coordinate conversion unit 255 calculates the d-axis voltage FF term Vdff and the q-axis voltage FF term Vqff by performing a conversion from the polar coordinate system to the rotational coordinate system (d-q axis) using the amplitude Vdqmgx and the phase Vdqmag set as described above. Thus, the voltage FF terms Vdff and Vqff are set in each of the voltage source mode and the system-connected mode in the same manner as in Fig. 4.

Further, when the mode selection signal SMD changes from "1" to "0" or from "0" to "1", the value of the voltage FF term Vdff or Vqff can be changed by limiting the amount of change per unit time according to the ramp rate kr or -kr.

Thus, in the power conversion system according to the second embodiment, it is possible to prevent the AC output current Iac from the power converter 110 from fluctuating due to abrupt changes in the voltage command value Vdref or Vqref caused by abrupt changes in the voltage FF term Vdff or Vqff when the operation mode is switched from the voltage source mode to the system-connected mode. Similarly, it is also possible to prevent the voltage command values Vdref and Vqref from changing abruptly when the operation mode is switched from the system-connected mode to the voltage source mode. Thus, it is possible to stabilize the operation of the power conversion system when the operation mode is switched.

Further, in switching the operation mode, the timing of changing the current command value and the timing of changing the voltage command value may be made different from each other. Specifically, by providing a timer to delay the off timing (from "1" to "0") of the mode selection signal SMD to be supplied to the voltage FF control unit 250X, the current command value setting unit 230X can change the mode selection signal SMD from "1" to "0" earlier than the voltage FF control unit 250X when switching the operation mode from the voltage source mode to the system-connected mode. Thus, the voltage command value can be changed after the current command value is changed, which makes it possible to reduce the voltage fluctuation caused by switching the operation mode.

Third Embodiment.

In the first embodiment, an AC current control involving a coordinate conversion into a rotational coordinate system has been described, but in the third embodiment, an AC current control on a stationary coordinate system will be described.

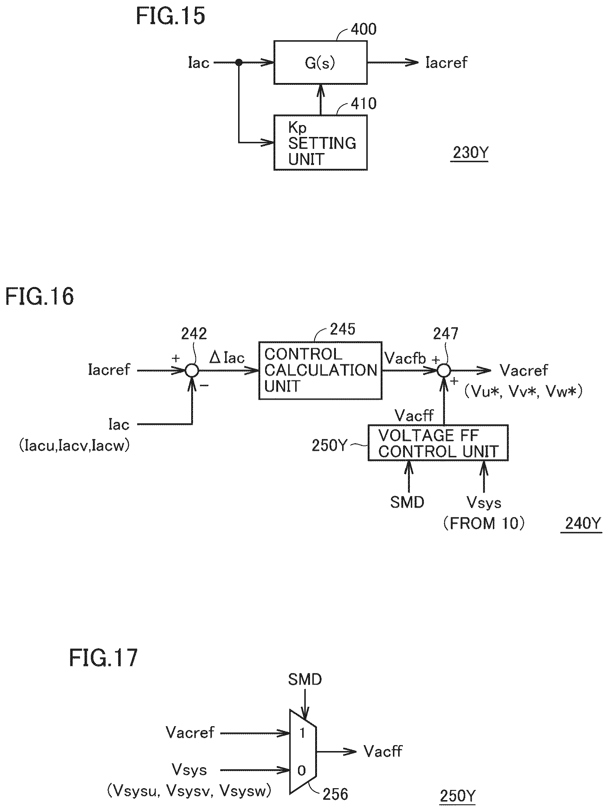

According to the power conversion system of the third embodiment, in the exemplary functional configuration illustrated in Fig. 3, a current command value setting unit 230Y (Fig. 15) is disposed instead of the current command value setting unit 230, and an AC voltage command value calculation unit 240Y (Fig. 16) is disposed instead of the AC voltage command value calculation unit 240, whereby the AC output current Iac is controlled by the AC current control unit 205. Further, in the AC voltage command value calculation unit 240Y, a voltage FF control unit 250Y (Fig. 17) is disposed instead of the voltage FF control unit 250.

Hereinafter, the functional configurations of the current command value setting unit 230Y, the AC voltage command value calculation unit 240Y, and the voltage FF control unit 250Y used in the power conversion unit according to the third embodiment will be described.

Fig. 15 illustrates an exemplary functional configuration of a current command value setting unit according to the third embodiment that generates a current command value in the voltage source mode.

In the third embodiment using the stationary coordinates, the current command value setting unit 230Y sets current command values Iacuref, Iacvref and Iacvref of the U phase, the V phase, and the W phase, respectively. Hereinafter, the current command values Iacuref, Iacvref and Iacvref may be collectively referred to as the current command value Ircref. The U-phase AC output current Iacu, the V-phase phase AC output current Iacv and the W-phase AC output current Iacw are controlled according to the current command values Iacuref, Iacvref and Iacvref, respectively.

Fig. 16 is a functional block diagram illustrating an exemplary functional configuration of the AC voltage command value calculation unit according to the third embodiment.

As illustrated in Fig. 16, the AC voltage command value calculation unit 240Y calculates a current difference ΔIac for each of the U phase, the V phase, and the W phase by subtracting the measured AC output current Iac from the current command value Iacref set by the current command value setting unit 230Y.

In the AC voltage command value calculation unit 240Y, the control calculation unit 245 calculates a feedback component (Vacfb) of an AC voltage command value Vacref for each phase according to a predetermined control calculation (for example, the proportional (P) control, the proportional resonance (PR) control, or the like) using the current difference ΔIac calculated for each of the U phase, the V phase, and the W phase in each control cycle as an input. Furthermore, the adder 247 calculates the AC voltage command value Vacref by adding the feedback component Vacfb from the control calculation unit 245 and the voltage FF term Vacff (AC component) from the voltage FF control unit 250Y for each of the U phase, the V phase, and the W phase. The voltage FF term Vacff is a generic term for the voltage FF terms calculated for each of the U phase, the V phase, and the W phase.

Fig. 17 is a functional block diagram illustrating an exemplary functional configuration of the voltage FF control unit 250Y according to the third embodiment.

As illustrated in Fig. 17, the voltage FF control unit 250Y includes a selector 256 which switches output in response to the mode selection signal SMD. The AC voltage command value Vacref predetermined for the voltage source mode and the system AC voltages Vsys (Vsysu, Vsysv, Vsysw) detected by the AC voltage detector 10 are input to the selector 256.

The AC voltage command value Vacref is preset as a sinusoidal voltage having a predetermined amplitude (for example, 1.0 [pu]) for each of the U phase, the V phase, and the W phase, and having a fundamental frequency fsys whose phases are shifted by 120 degrees.

In the voltage source mode where SMD is set to "1", the selector 256 outputs the AC voltage command value Vacref for the voltage source mode as the voltage FF term Vacff for each of the U phase, the V phase, and the W phase.

On the other hand, in the system-connected mode where SMD is set to "0", the selector 256 outputs the system AC voltage Vsys (Vsysu, Vsysv, Vsysw) detected by the AC voltage detector 10 as the voltage FF term Vacff for each of the U phase, the V phase, and the W phase.

With reference to Fig. 16 again, the AC voltage command value Vacref generated by the adder 247 corresponds to a generic name of the three-phase voltage command values Vu*, Vv* and Vw* in Fig. 3. Similar to Fig. 3, the on/off control signals Suu, Sul, Svu, Svl, Swu and Swl of the switching elements 31 in the U-phase to V-phase upper and lower arms of the power converter 110 are generated from the voltage command values Vu*, Vv* and Vw*.

Next, the setting of the current command value Iacref in the third embodiment will be described in detail.

With reference to Fig. 15 again, the current command value setting unit 230Y includes a bandpass filter 400 and a gain setting unit 410. The bandpass filter 400 outputs fundamental wave components of the AC output current Iac (Iacu, Iacv, Iacw) sequentially measured by the AC current detector 9. The transfer function G(s) of the bandpass filter 400 is expressed by the following equation (11).

[Math. 4]

$$G(s) = \frac{\xi.\omega f.s}{s^2 + \frac{\xi.\omega f}{Kp}s + \omega f^2} \qquad (11)$$

The angular frequency ωf in the equation (11) is expressed by the fundamental frequency fsys, i.e., ωf = 2π*fsys. Therefore, the bandpass filter 400 multiplies the fundamental wave component (fundamental frequency fs) of the measured AC output current Iac by Kp and outputs the result. The current command value Ircref (Iacuref, Iacvref, Iacvref) is set based on the output value of the bandpass filter 400. Thus, the current command value Iacref is set based on the amplitude and phase of the fundamental wave component of the present AC output current Iac in each phase.

The gain setting unit 410 has a function of variably setting the gain Kp in the equation (11) according to the amplitude of the AC output current Iac (Iacu, Iacv, Iacw).

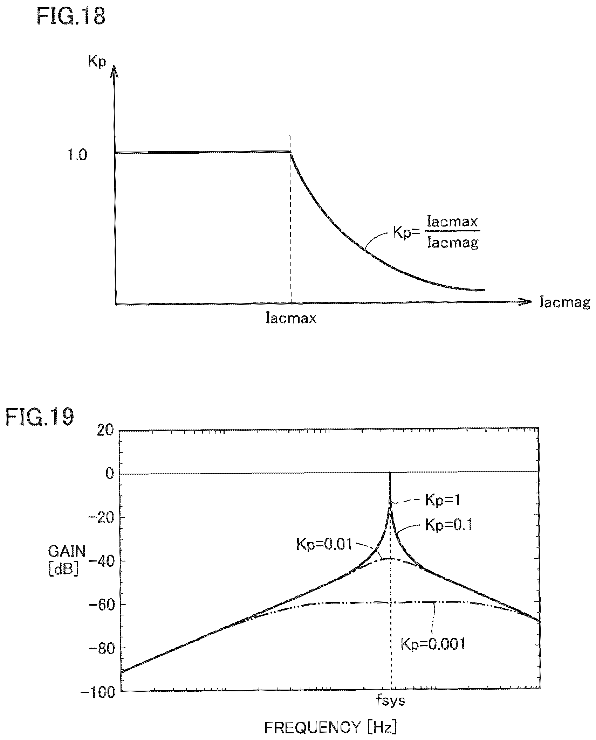

Fig. 18 is a conceptual diagram illustrating functions of the gain setting unit 410.

As illustrated in Fig. 18, the gain setting unit 410 sets Kp = 1.0 when an amplitude Iacmag of the AC output current Iac is equal to or less than a predetermined current upper limit value Iacmax. Similar to the current upper limit value Idqmax in the rotational coordinate system, the current upper limit value Iacmax is an upper limit value set in the stationary coordinate system so as to prevent the overcurrent protection of the power converter 110 from being activated.

Therefore, when Iacmag ≤ Iacmax, the bandpass filter 400 sets the current command value Iacref according to the amplitude and phase of the fundamental wave component of the present AC output current Iac.

On the other hand, when the amplitude Iacmag of the AC output current Iac is larger than the current upper limit value Iacmax, the gain setting unit 410 sets Kp = Iacmax/Iacmag. Accordingly, since the amplitude of the fundamental wave component of the AC current Iac output from the bandpass filter 400 is limited to the current upper limit value Iacmax or less, the amplitude of the current command value Iacref can be limited in the same manner as in the limit process using the current upper limit value Idqmax in the first embodiment.

Fig. 19 illustrates frequency characteristic of the bandpass filter 400 with respect to the gain Kp set by the gain setting unit 410. Fig. 19 illustrates the frequency characteristic when Kp = 1, 0.1, 0.01, and 0.001.

As illustrated in Fig. 19, although the sharpness of the band pass decreases as the gain Kp decreases, it is understood that the filtering can be performed with sufficient sharpness to extract the fundamental wave component (the fundamental frequency fsys) when the gain Kp is about 0.1 or less, in other words, when Iacmag ≤ 10×Iacmax. The sharpness of the frequency characteristic varies depending on the value of "ξ" in the equation (11). Specifically, the smaller the value ξ is, the higher the sharpness becomes, which makes it possible to ensure the sharpness even for a smaller gain Kp. As described above, since the frequency characteristic of the band-pass filter 400 varies depending on the constant ξ and the gain Kp, the frequency characteristic illustrated in Fig. 19 is one example.

As described above, according to the power conversion system of the third embodiment, in the voltage source mode applied at least at a black start, since the AC output current Iac is limited according to the present current value by the output current control in the stationary coordinate system, the power conversion system can operate as a voltage source that outputs the AC voltage of the fundamental frequency fsys having the predetermined amplitude and phase. In other words, the same effect as that of the first embodiment can be realized by the output current control in the stationary coordinate system.

Further, since the gain setting unit 410 adjusts the gain Kp of the band-pass filter 400 according to the amplitude of the AC output current Iac (Fig. 18), the same limit process as in the first embodiment can be realized.

The power conversion unit according to the third embodiment can be combined with the power conversion unit according to the second embodiment.

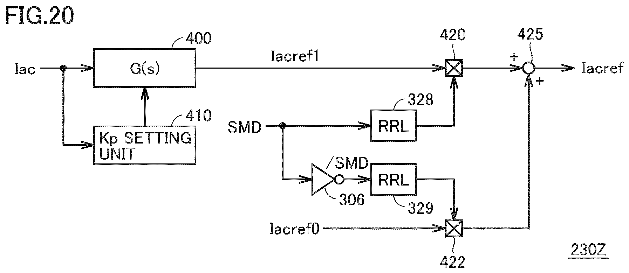

Fig. 20 is a functional block diagram illustrating an exemplary functional configuration of a current command value setting unit 230Z according to a combination of the second embodiment and the third embodiment.

As illustrated in Fig. 20, the current command value setting unit 230Z includes an inverter 306, ramp rate limiters (RRL) 328 and 329, multipliers 420 and 422, and an adder 425, in addition to the bandpass filter 400 and the gain setting unit 410 illustrated in Fig. 16.

A mode selection signal SMD is input to the RRL 328. An inverted signal (/SMD) obtained by the inverter 306 from the mode selection signal SMD is input to the RRL 329. Therefore, the output values of the RRL 328 are the same as those of the RRLs 311 and 313 in Fig. 10, and the output values of the RRL 329 are the same as those of the RRLs 312 and 314 in Fig. 10.

The multiplier 420 multiplies the output value of the bandpass filter 400, in other words, a current command value Iacref1 for the voltage source mode, by the output value of the RRL 328. The multiplier 422 multiplies a current command value Iacref0 in the system-connected mode by the output value of the RRL 329. Similar to the current command values Idref0 and Iqref0 in the first embodiment, the current command value Iacref0 for the system-connected mode is generated according to a command from a host system.

The adder 425 adds the output value of the multiplier 420 and the output value of the multiplier 422 to output a current command value Iacref on the stationary coordinate system. Therefore, the current command value Iacref is expressed by the following equation (12) using the current command value Iacref1 for the voltage source mode, the current command value Iacref0 for the system-connected mode, the output value α of the RRL 328, and the output value (1-α) of the RRL 329. Also, the equation (12) is both valid when the mode selection signal SMD is maintained at "0" or "1" and when the mode selection signal SMD is switched between "0" and "1".

$$\mathrm{Iacref} = \alpha \cdot \mathrm{Iacref1} + (1-\alpha) \cdot \mathrm{Iacref0} \qquad (12)$$

As described above, by applying the second embodiment to the power conversion system that performs the AC current control on the stationary coordinate system according to the third embodiment, it is possible to prevent the current command value Iacref from abruptly changing when the operation mode is switched between the voltage source mode and the system-connected mode, which makes it possible to stabilize the operation of the power conversion system.

Although not shown in the figures, as described in the second embodiment, by further disposing a ramp rate limiter (RRL) in the voltage FF control unit 250Y illustrated in Fig. 17, it is also possible to gradually change the voltage FF term Vacff when the operation mode is switched between the voltage source mode and the system-connected mode. Thus, it is possible to stabilize the operation of the power conversion system when the operation mode is switched.

<Modification of Power Converter>

The circuit configuration of the power converter 110 is not limited to the two-level converter illustrated in Fig. 1, and for example, the power converter 110 may be constituted by a modular multi-level converter (MMC).

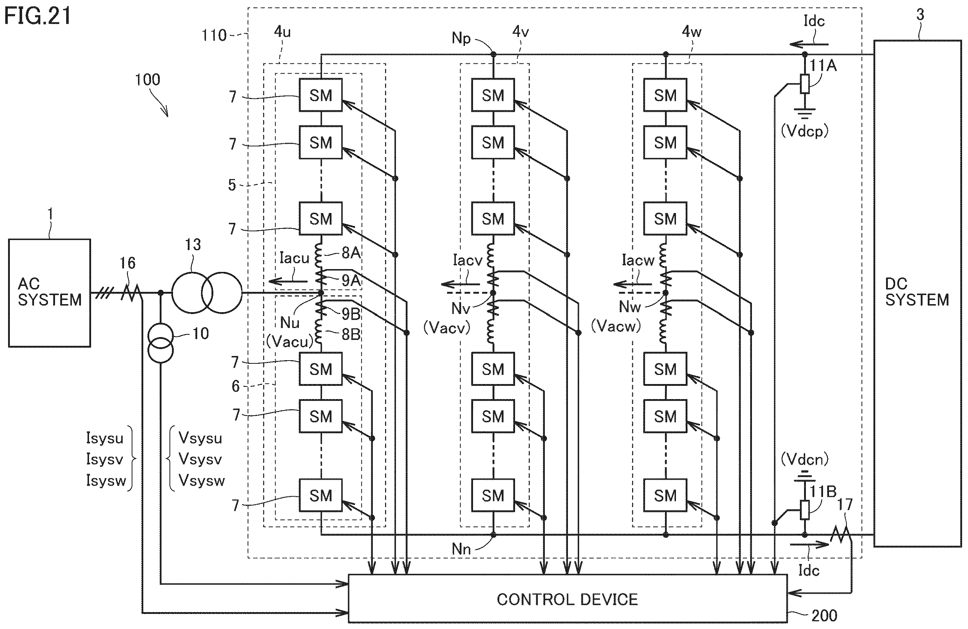

Fig. 21 is a schematic configuration diagram illustrating a modification of the power converter 110.

With reference to Fig. 21, the power converter 110 according to the modification is constituted by a modular multi-level converter (MMC) that includes a plurality of converter cells connected in series to each other. The "converter cell" is also referred to as a "submodule", an "SM", or a "unit converter".

The power converter 110 illustrated in Fig. 21 differs from the circuit configuration of Fig. 1 in the configuration of the leg circuits 4u, 4v and 4w. Since the leg circuits 4u, 4v and 4w have the same configuration, the configuration of the leg circuit 4u will be described below as a representative example.

The upper arm 5 includes a plurality of cascaded converter cells 7 and a reactor 8A. The plurality of converter cells 7 and the reactor 8A are connected in series. Similarly, the lower arm 6 includes a plurality of cascaded converter cells 7 and a reactor 8B. The plurality of converter cells 7 and the reactor 8B are connected in series. The number of transducer cells 7 included in the upper arm 5 or the lower arm 6 is two or more.

The position to dispose the reactor 8A may be any position in the upper arm 5 of the leg circuit 4u, and the position to dispose the reactor 8B be any position in the lower arm 6 of the leg circuit 4u. The reactor 8A may be disposed more than one, and the reactor 8B may be disposed more than one. The inductance value of each reactor may be different from each other. Further, it is acceptable that only the reactor 8A is disposed in the upper arm 5 or only the reactor 8B is disposed in the lower arm 6. Furthermore, the wirings of the transformer may be devised to cancel the magnetic flux of the DC component current, and thereby the leakage inductance of the transformer may act on the AC component current instead of a reactor. By providing the reactors 8A and 8B, it is possible to prevent an accident current from increasing rapidly at the time of an accident in the AC system 1 or the DC system 3.

The arm current detectors 9A and 9B provided in the U-phase leg circuit 4u detect an upper arm current Ipu flowing through the upper arm 5 and a lower arm current Inu flowing through the lower arm 6, respectively. The arm current detectors 9A and 9B provided in the V-phase leg circuit 4v detect an upper arm current Ipv and a lower arm current Inv, respectively. The arm current detectors 9A and 9B provided in the W-phase leg circuit 4w detect an upper arm current Ipw and a lower arm current Inw flowing through the upper arm 5, respectively. In the following description, the upper arm currents Ipu, Ipv, and Ipw may be collectively referred to as an upper arm current Iarmp, and the lower arm currents Inu, Inv, and Inw may be collectively referred to as a lower arm current Iarmn. In each phase, the AC output current Iac can be determined based on the difference between the upper arm current Iarmp and the lower arm current Iarmn in the same manner as the AC current detector 9 of Fig. 1.

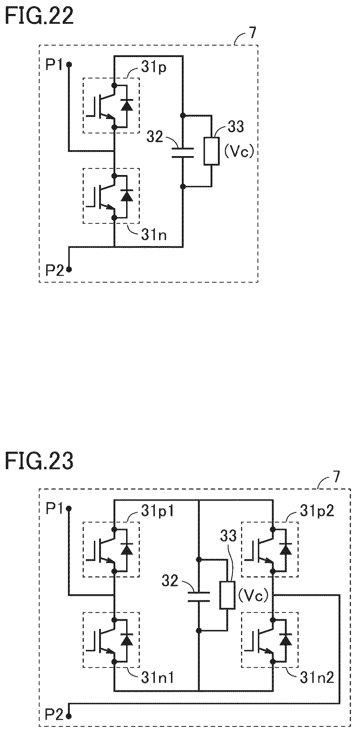

Fig. 22 is a circuit diagram illustrating a first exemplary configuration of a converter cell 7 illustrated in Fig. 21. As illustrated in Fig. 22, the converter cell 7 according to the first exemplary configuration has a circuit configuration called a half-bridge configuration.

The converter cell 7 includes a series body formed by two switching elements 31p and 31n connected in series, a power storage element 32, a voltage detector 33, and input/output terminals P1 and P2. The series body formed by the switching elements 31p and 31n is connected in parallel to the power storage element 32. The voltage detector 33 detects a voltage Vc across the power storage element 32.

Both terminals of the switching element 31n are connected to the input/output terminals P1 and P2, respectively. The converter cell 7 outputs a voltage Vc or a zero voltage of the power storage element 32 between the input/output terminals P1 and P2 based on the switching operation of the switching elements 31p and 31n. When the switching element 31p is turned on and the switching element 31n is turned off, the converter cell 7 outputs a voltage Vc of the storage element 32. When the switching element 31p is turned off and the switching element 31n is turned on, the converter cell 7 outputs a zero voltage.

Fig. 23 is a circuit diagram illustrating a second exemplary configuration of the converter cell 7 illustrated in Fig. 21. As illustrated in Fig. 23, the converter cell 7 according to the second exemplary configuration has a circuit configuration called a full bridge configuration.

The converter cell 7 includes a first series body formed by two switching elements 31p1 and 31n1 connected in series, a second series body formed by two switching elements 31p2 and 31n2 connected in series, a power storage element 32, a voltage detector 33, and input/output terminals P1 and P2. The first series body, the second series body, and the power storage element 32 are connected in parallel. The voltage detector 33 detects the voltage Vc across the power storage element 32.

A midpoint of the switching element 31p1 and the switching element 31n1 is connected to the input/output terminal P1. Similarly, a midpoint between the switching element 31p2 and the switching element 31n2 is connected to the input/output terminal P2. The converter cell 7 outputs a voltage Vc, a voltage -Vc, or a zero voltage of the power storage element 32 between the input/output terminals P1 and P2 based on the switching operation of the switching element 31p1, 31n1, 31p2 and 31n2.

In Figs. 22 and 23, each of the switching elements 31p, 31n, 31p1, 31n1, 31p2 and 31n2 is constituted by connecting an FWD in anti-parallel to a self-commutating type semiconductor switching element such as an IGBT or a GCT thyristor as described in the first embodiment. In addition, a capacitor such as a film capacitor is mainly used as the power storage element 32.

As illustrated in Fig. 21, the converter cells 7 are cascaded. In each of Figs. 22 and 23, the input/output terminal P1 of a converter cell 7 disposed in the upper arm 5 is connected to the input/output terminal P2 or the high-potential DC terminal Np of an adjacent converter cell 7, and the input/output terminal P2 thereof is connected to the input/output terminal P1 or the AC terminal Nu of the adjacent converter cell 7. Similarly, the input/output terminal P1 of a converter cell 7 disposed in the lower arm 6 is connected to the input/output terminal P2 or the AC terminal Nu of an adjacent converter cell 7, and the input/output terminal P2 thereof is connected to the input/output terminal P1 or the low-potential DC terminal Nn of the adjacent converter cell 7.

The converter cell 7 constituting the power converter 110X may be a converter cell other than that illustrated in Figs. 22 and 23, such as a converter cell to which a circuit configuration called a clamped double cell or the like is applied, and the switching element and the power storage element are not limited to those in the above examples.

Also, the power converter 110 illustrated in Fig. 21 can control the AC output current Iac (Iacu, Iacv, Iacw) according to the current command value Idref, Iqref or Iacref in the same manner as described in the first to third embodiments. Also, the power converter 110 of Fig. 21 can control the switching elements 31p, 31n, 31p1, 31n1, 31p2 and 31n2 included in the converter cells 7 of the upper arm and the lower arm of each phase according to the PWM control (the PWM control unit 270) based on the three-phase voltage command values Vu*, Vv* and Vw*.

In addition to the modification of Fig. 21, as long as the power converter 110 can have an operating mode of operating as a voltage source, a self-commutated power converter with a circuit configuration other than that described above can be applied to the power conversion system according to the present embodiment.

The configurations exemplified as the above-described embodiments are one example configuration of the present disclosure, and can be combined with other known technique, or can be modified, such as omitting a part of the configurations, without departing from the gist of the present disclosure. Moreover, in the above-described embodiments, the processes and configurations described in the other embodiments may be appropriately adapted and implemented.

It should be understood that the embodiments disclosed herein are illustrative and non-restrictive in all respects. The scope of the present invention is defined by the terms of the claims rather than the description of the embodiments above, and is intended to include any modifications within the scope and meaning equivalent to the terms of the claims.

REFERENCE SIGNS LIST

1: AC system; 3: DC system; 4, 4u, 4v, 4w: leg circuit; 5: upper arm; 6: lower arm; 7: converter cell; 8A, 8B: reactor; 9, 16: AC current detector; 9A: arm current detector; 10: AC voltage detector; 11A, 11B: DC voltage detector; 12, 32: power storage element; 13: transformer; 17: DC current detector; 20: input converter; 21: sample-hold circuit; 22: multiplexer; 23: converter; 25: RAM; 26: ROM; 27: input/output interface; 28: auxiliary storage device; 29: bus; 31, 31n, 31n1, 31n2, 31p, 31p1, 31p2: switching element; 33: voltage detector; 100: power conversion system; 110, 110X: power converter; 200: control device; 205: AC current control unit; 210, 220, 235, 237, 252, 255, 301: coordinate conversion unit; 230, 230X, 230Y, 230Z: current command value setting unit; 231-233, 238: LPF (limiter function); 233X: current upper limit value adjustment unit; 234: LPF; 236: limiter; 240, 240Y: AC voltage command value calculation unit; 242: subtractor; 245: control calculation unit; 250, 250X, 250Y: voltage feedforward control unit; 253, 254, 256: selector; 260: three-phase voltage command generation unit; 270: PWM control unit; 311-314, 321-329: ramp rate limiter (RRL); 400: bandpass filter; 410: gain setting unit; Iacmax, Idmax, Idqmax, Iqmax: current upper limit; Iac, Iacu, Iacv, Iacw: AC output current; Idref, Iqref: current command value; Idref0, Iqref0: current command value (system cooperation mode); Isys, Isysu, Isysv, Isysw: system AC current; Kp: gain; Nn: low-potential DC terminal; Np: high-potential DC terminal; Nu, Nv, Nw: AC terminal; P1, P2: input/output terminal; SMD: mode selection signal; Sul, Suu, Svl, Svu, Swl, Swu: ON/OFF control signal (switching element); Vacff, Vdff, Vqff: voltage FF term; Vacref: AC voltage command value; Vac, Vacu, Vacv, Vacw: AC output voltage; Vdref, Vqref, Vu*, Vv*, Vw*: voltage command value; Vsys, Vsysd, Vsysq, Vsysu, Vsysv, Vsysw: system AC voltage; fsys: fundamental frequency.

**EP 4 679 702 A1**

**Claims**

1. A power conversion system comprising:

a power converter that is connected between an AC circuit and a DC circuit and includes at least one self-commutating type semiconductor switching element;
an AC current detector to detect an AC output current from the power converter to the AC circuit; and
a control device to generate an on/off command for the semiconductor switching element to control the power converter,
the control device includes:

a current command value setting unit to set an AC current command value; and
an AC current control unit to generate the on/off command according to an AC voltage command value calculated to cause the AC output current detected by the AC current detector to follow the AC current command value,

in a first operation mode in which the power converter operates as a voltage source, the current command value setting unit sets the AC current command value based on a fundamental wave component of the AC output current detected by the AC current detector, and
in the first operation mode, the AC current control unit calculates the AC voltage command value according to the sum of a feedback component for compensating for a current difference between the AC current command value and the AC output current detected by the AC current detector and an AC component having a frequency of the fundamental wave component.

2. The power conversion system according to claim 1, wherein
the first operation mode is applied at least at a black start when the power converter operates with no power supplied to the AC circuit.

3. The power conversion system according to claim 1 or 2, wherein
the current command value setting unit sets the AC current command value such that an amplitude of an AC current in accordance with the AC current command value becomes equal to or less than a predetermined current upper limit value.

4. The power conversion system according to claim 1 or 2, wherein
the current command value setting unit sets a d-axis AC current command value and a q-axis AC current command value of the AC current command value based on a d-axis AC current and a q-axis AC current which are obtained by performing a rotational coordinate conversion on the AC output current detected by the AC current detector using an angular velocity in accordance with a frequency of the fundamental wave component.

5. The power conversion system according to claim 4, wherein
the current command value setting unit sets the d-axis AC current command value and the q-axis AC current command value according to a d-axis current value and a q-axis current value which are obtained by performing a limit process on the d-axis AC current and the q-axis AC current which are obtained through the rotational coordinate conversion such that absolute values thereof fall within a predetermined range.

6. The power conversion system according to claim 4, wherein

the current command value setting unit sets the d-axis AC current command value according to a value which is obtained by performing a limit process on the d-axis AC current obtained through the rotational coordinate conversion such that an absolute value thereof becomes equal to or less than a predetermined first upper limit value,
the current command value setting unit sets the q-axis AC current command value according to a value which is obtained by performing a limit process on the q-axis AC current obtained through the rotational coordinate conversion such that an absolute value thereof becomes equal to or less than a second upper limit value, and
the second upper limit value is obtained as a root square of a value which is obtained by subtracting a square value of the d-axis AC current command value from a square value of a predetermined current upper limit value.

7. The power conversion system according to claim 4, wherein

18

the current command value setting unit sets the q-axis AC current command value according to a value which is obtained by performing a limit process on the q-axis AC current obtained through the rotational coordinate conversion such that an absolute value thereof becomes equal to or less than a predetermined first upper limit value, and

the current command value setting unit sets the d-axis AC current command value according to a value which is obtained by performing a limit process on the d-axis AC current obtained through the rotational coordinate conversion such that an absolute value thereof becomes equal to or less than a second upper limit value, and the second upper limit value is obtained as a root square of a value which is obtained by subtracting a square value of the q-axis AC current command value from a square value of a predetermined current upper limit value.

8. The power conversion system according to any one of claims 5 to 7, wherein
the d-axis AC current and the q-axis AC current which are obtained through the rotational coordinate conversion are subjected to the limit process after passing through a low-pass filter.

9. The power conversion system according to claim 4, wherein
the current command value setting unit sets the d-axis AC current command value and the q-axis AC current command value by converting the d-axis AC current and the q-axis AC current which are obtained through the rotational coordinate conversion into an amplitude and a phase of an AC current, performing a limit process on the amplitude such that it becomes equal to or less than a predetermined current upper limit value, and inversely converting the amplitude and the phase after the limit process into a d-axis AC current and a q-axis AC current.

10. The power conversion system according to claim 9, wherein
the d-axis AC current and the q-axis AC current which are obtained through the rotational coordinate conversion are converted into the amplitude and the phase after passing through a low-pass filter.

11. The power conversion system according to claim 9, wherein
the amplitude is subjected to the limit process after passing through a low-pass filter.

12. The power conversion system according to claim 1 or 2, wherein

the current command value setting unit includes a bandpass filter to output the fundamental wave component of the AC output current detected by the AC current detector, and
the current command value setting unit sets the AC current command value according to an output from the bandpass filter.

13. The power conversion system according to claim 12, wherein

the bandpass filter is configured to output the fundamental wave component multiplied by Kp, and
the current command value setting unit further includes a gain setting unit to set the Kp variable within a range of 0 to 1.0 according to an amplitude of the AC output current detected by the AC current detector such that the amplitude becomes equal to or less than a predetermined current upper limit value.

14. The power conversion system according to claim 13, wherein
when the amplitude is equal to or less than the current upper limit value, the gain setting unit sets the Kp to 1.0, and when the amplitude is greater than the current upper limit value, the gain setting unit sets the Kp according to a value which is obtained by dividing the current upper limit value by the amplitude.

15. The power conversion system according to any one of claims 1 to 14, wherein
when the power conversion system is switched from the first operation mode to a second operation mode in which the power conversion system operates to interconnect with the AC circuit, the current command value setting unit changes the AC current command value by limiting a change amount of the AC current command value per unit time within a predetermined range.

16. The power conversion system according to claim 15, further comprising:

an AC voltage detector that detects an AC voltage of the AC circuit,
wherein in the second operation mode, the current command value setting unit sets the AC current command value according to a command from the outside of the power conversion system,

in the second operation mode, the AC current control unit calculates the AC voltage command value according to the sum of an AC component in accordance with the AC voltage detected by the feedback component.

17. The power conversion system according to claim 15 or 16, wherein
when the operation mode is switched from the first operation mode to the second operation mode, the AC voltage command value is calculated by limiting a change amount of the AC current command value per unit time within a predetermined range.

FIG.1

FIG.2

200

CPU 24

ROM 26

29

RAM 25

INPUT/
OUTPUT
I/F 27

INPUT
CONVERTER 20

S/H 21

MUX 22

A/D 23

AUXILIARY
STORAGE
DEVICE 28

FIG.3

FIG.4

Vsysd
Vsysq → 251 LPF → 252 dq ↓ rθ

Vdqmag → 253 0/1 ← Vmagref (1.0 [pu])

Vdqph → 254 0/1 ← 0 (Vphref)

SMD

255 rθ ↓ dq → Vdff Vqff

250

FIG.5

+Idqmax

Iq
Id → LPF → Iqref
Idref

−Idqmax      231

230

FIG.6

+Idmax

Id → LPF → Idref

−Idmax      232

CURRENT UPPER
LIMIT VALUE
ADJUSTMENT UNIT
Iqmax

233X

$+\sqrt{Idqmax^2-Idref^2}$ ← +Iqmax

Iq → LPF → Iqref

0

233

$-\sqrt{Idqmax^2-Idref^2}$ ← −Iqmax

230

FIG.7

FIG.8

FIG.9

FIG.10

FIG.11

## FIG.12

+Idmax

Id → LPF → Idf → ⊠ 309 — + ◯ 313 + → Idref

-Idmax ⌐ 232

SMD •——→ RRL 321

/SMD
302 ▷o→ RRL 322

Idref0 ——————————→ ⊠ 310

$+\sqrt{Idqmax^2-Idf^2}$

Iq → LPF → Iqf → ⊠ 311 — + ◯ 314 + → Iqref

$-\sqrt{Idqmax^2-Idf^2}$ ⌐ 233

SMD •——→ RRL 323

/SMD
303 ▷o→ RRL 324

Iqref0 ——————————→ ⊠ 312

230X

FIG.13

FIG.14

EP 4 679 702 A1

FIG.15

```
              ┌────────┐
Iac ──────●──→│  G(s)  │───→ Iacref
          │   └────────┘  ⌐400
          │        ↑ ⌐410
          │   ┌────────┐
          │   │  Kp    │
          └──→│SETTING │        230Y
              │ UNIT   │
              └────────┘
```

FIG.16

```
       242            ⌐245         247
                  ┌──────────┐
        +   ΔIac  │ CONTROL  │ Vacfb +
Iacref ──→⊖─────→│CALCULATION│────→⊕───→ Vacref
        −         │  UNIT    │        +   (Vu*, Vv*, Vw*)
        │         └──────────┘        ↑
        │                          Vacff
Iac ────┘                  ┌──────────────┐
(Iacu,Iacv,Iacw)    250Y ─│ VOLTAGE FF    │
                          │ CONTROL UNIT  │
                          └──────────────┘
                              ↑       ↑
                            SMD     Vsys
                                  (FROM 10)    240Y
```

FIG.17

```
                    SMD
                     │
                     ↓
                 ┌──────┐
Vacref ─────────→│  1   │
                 │       ├──→ Vacff
Vsys ───────────→│  0   │
(Vsysu, Vsysv, Vsysw)└──────┘
                        ⌐256    250Y
```

FIG.18

$$Kp = \frac{Iacmax}{Iacmag}$$

FIG.19

Kp=1
Kp=0.1
Kp=0.01
Kp=0.001

GAIN [dB]

fsys

FREQUENCY [Hz]

FIG.20

FIG.21

**FIG.22**

**FIG.23**

## INTERNATIONAL SEARCH REPORT

| International application No. |
|---|
| **PCT/JP2023/008601** |

### A.    CLASSIFICATION OF SUBJECT MATTER

*H02M 7/48*(2007.01)i
FI:    H02M7/48 R

According to International Patent Classification (IPC) or to both national classification and IPC

### B.    FIELDS SEARCHED

Minimum documentation searched (classification system followed by classification symbols)

H02M7/48; H02J3/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | WO 2020/217428 A1 (MITSUBISHI ELECTRIC CORPORATION) 29 October 2020 (2020-10-29)<br>entire text, all drawings | 1-17 |
| A | JP 2009-542182 A (ABB TECHNOLOGY AG) 26 November 2009 (2009-11-26)<br>entire text, all drawings | 1-17 |
| A | JP 6730946 B2 (KABUSHIKI KAISHA TOSHIBA) 29 July 2020 (2020-07-29)<br>entire text, all drawings | 1-17 |
| A | JP 2007-259567 A (TOSHIBA MITSUBISHI-ELECTRIC INDUSTRIAL SYSTEMS CORPORATION) 04 October 2007 (2007-10-04)<br>entire text, all drawings | 1-17 |

☐ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/008601**

| Patent document cited in search report | | | Publication date (day/month/year) | Patent family member(s) | | | Publication date (day/month/year) |
|---|---|---|---|---|---|---|---|
| WO | 2020/217428 | A1 | 29 October 2020 | JP | 6608105 | B1 | |
| | | | | US | 2022/0158568 | A1 | |
| | | | | entire text, all drawings | | | |
| | | | | EP | 3961903 | A1 | |
| JP | 2009-542182 | A | 26 November 2009 | US | 2009/0279328 | A1 | |
| | | | | entire text, all drawings | | | |
| | | | | WO | 2008/000626 | A1 | |
| | | | | CN | 101479910 | A | |
| JP | 6730946 | B2 | 29 July 2020 | (Family: none) | | | |
| JP | 2007-259567 | A | 04 October 2007 | US | 2007/0223261 | A1 | |
| | | | | entire text, all drawings | | | |

Form PCT/ISA/210 (patent family annex) (January 2015)

**EP 4 679 702 A1**

**Patent documents cited in the description**

- JP 6730946 B